# EUROPEAN PATENT APPLICATION

(11) **EP 4 836 538 A1**
(43) Date of publication of application: **04.11.2026**
(21) Application number: 25741378.1
(22) Date of filing: 07.01.2025
(51) Int. Cl.: H04W 52/02, H04B 7/185

(54) **COMMUNICATION METHOD AND APPARATUS**

(30) Priority: 19.01.2024 CN 202410084594
(71) Applicant: Huawei Technologies Co., Ltd., Shenzhen, Guangdong 518129 (CN)
(72) Inventor: LIAO, Ting, Shenzhen, Guangdong 518129 (CN); ZONG, Zaifeng, Shenzhen, Guangdong 518129 (CN); ZHANG, Zheng, Shenzhen, Guangdong 518129 (CN); LI, Guanglei, Shenzhen, Guangdong 518129 (CN)
(74) Representative: Pfenning, Meinig & Partner mbB
(86) International application number: PCT/CN2025/070990
(87) International publication number: WO 2025/152815

(57) **Abstract**

This application provides a communication method and apparatus. The method includes: A terminal sends a first message to a first network element, where the first network element is located on a first satellite. The terminal receives a second message from the first network element, where the second message includes first information, and the first information is used to trigger the terminal to enter a sleep state. The terminal enters the sleep state based on the first information. According to the foregoing method, the terminal may enter the sleep state based on the second message without repeatedly sending the first message, thereby reducing power consumption of the terminal.

## Description

### CROSS-REFERENCE TO RELATED APPLICATIONS

This application claims priority to Chinese Patent Application No. 202410084594.2, filed with the China National Intellectual Property Administration on January 19, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, communication links may simultaneously exist between a satellite and a terminal and between the satellite and a ground core network device. The satellite may forward data or signaling from the terminal to the ground core network device, and may also forward data or signaling from the ground core network device to the terminal. In some scenarios, however, the communication links between the satellite and the terminal and between the satellite and the ground core network device may not exist simultaneously. For example, the satellite may be unable to simultaneously provide coverage for both the terminal and the ground core network device.

When the satellite cannot simultaneously cover both the terminal and the ground core network device, how to optimize communications between the satellite and the terminal and between the satellite and the ground core network device, so as to improve communication efficiency, becomes an issue worthy of attention.

### SUMMARY

Embodiments of this application provide a communication method and apparatus, to optimize communications between a satellite and a terminal and between the satellite and a ground core network device.

According to a first aspect, this application provides a communication method. The method includes: A terminal sends a first message to a first network element, where the first network element is located on a first satellite. The terminal receives a second message from the first network element, where the second message includes first information, and the first information is used to trigger the terminal to enter a sleep state. The terminal enters the sleep state based on the first information.

According to the foregoing method, the terminal may enter the sleep state based on the second message without repeatedly sending the first message, thereby reducing power consumption of the terminal.

In a possible design, the first information is capability information of the first network element, and the capability information of the first network element indicates that the first network element supports store-and-forward; or the first information indicates that there is no feeder information between the first network element and a core network device.

In a possible design, the first message is a non-access stratum NAS message or uplink data.

In a possible design, the first message is a first registration request message; and before the terminal enters the sleep state, the terminal sends a second registration request message to the first network element based on the first information.

In a possible design, the first message is a first registration request message, the second message further includes second information, and the second information is used to trigger reporting of at least one parameter; and before the terminal enters the sleep state, the terminal sends a second registration request message to the first network element based on the second information, where the second registration request message includes the at least one parameter.

In the foregoing design, the terminal may send a message to the first network element a plurality of times.

In a possible design, after the terminal sends the second registration request message to the first network element, the terminal receives a third message from the first network element, where the third message indicates that the first satellite does not serve the terminal.

In the foregoing design, the terminal may enter the sleep state or start a first timer after receiving the third message.

In a possible design, the second message or the third message includes information about the first timer, and the first timer indicates a duration in which the terminal is in the sleep state. The terminal resends the first message after the first timer expires.

In a possible design, the second message further includes third information, the third information is used to determine a second satellite, and the second satellite is a next satellite to serve the terminal; the terminal receives a broadcast message, where the broadcast message indicates a satellite that covers the terminal; the terminal determines, based on the third information, that the satellite indicated by the broadcast message is the second satellite; and the terminal resends the first message to a second network element, where the second network element is located on the second satellite.

In the foregoing design, the terminal may listen to the broadcast message, determine, based on the third information, that the satellite that covers the terminal is the second satellite, and resend the first message to the second network element.

In a possible design, the third information includes at least one of an identifier of the second network element, an identifier of the second satellite, or an identifier of another device located on the second satellite, and the second network element supports store-and-forward.

In a possible design, the second satellite covers the terminal earlier than the first satellite, and when there is a communication link between the first satellite and the core network device, there is also a communication link between the second satellite and the core network device, and the core network device is located on the ground.

According to a second aspect, this application provides a communication method. The method includes: A first network element receives a first message from a terminal, where the first network element is located on a first satellite. When there is no communication link between the first network element and a core network device, the first network element sends a second message to the terminal, where the second message includes first information, the first information is used to trigger the terminal to enter a sleep state, and the core network device is located on the ground.

In the foregoing design, when determining that there is no communication link between the first network element and the core network device, the first network element may notify the terminal to enter the sleep state.

In a possible design, the first information is capability information of the first network element, and the capability information of the first network element indicates that the first network element supports store-and-forward; or the first information indicates that there is no feeder information between the first network element and the core network device.

In a possible design, the first message is a NAS message or uplink data.

In a possible design, the first message is a first registration request message; and after the first network element sends the second message to the terminal, the first network element receives a second registration request message from the terminal.

In a possible design, the first network element determines second information based on the first registration request message, where the second information is used to trigger reporting of at least one parameter; the second message further includes the second information; and the second registration request message includes the at least one parameter.

In the foregoing design, the first network element may parse the first registration message, and notify the terminal of a parameter that further needs to be uploaded.

In a possible design, when there is a communication link between the first network element and the core network device, the first network element sends a third registration request message to the core network device, where the third registration request message is determined based on the first registration request message and the second registration request message.

In the foregoing design, the first network element may combine received NAS messages.

In a possible design, after the first network element receives the second registration request message from the terminal, the first network element sends a third message to the terminal, where the third message indicates that the first satellite does not serve the terminal.

In the foregoing design, the first network element may notify that the first network element does not cover the terminal.

In a possible design, the second message or the third message further includes information about a first timer, and the first timer indicates a duration in which the terminal is in the sleep state.

In a possible design, the second message further includes third information, the third information is used to determine a second satellite, and the second satellite is a next satellite to serve the terminal; and the first network element determines the third information based on at least one of ephemeris information, location information of the terminal, and receive beam information of the first message.

In the foregoing design, the first network element can determine a next satellite to serve the terminal.

In a possible design, the third information includes at least one of an identifier of a second network element, an identifier of the second satellite, or an identifier of another device located on the second satellite, the second network element is located on the second satellite, and the second network element supports store-and-forward.

In a possible design, the receive beam information includes at least one of receive moment information, a beam angle, a beam identifier, or physical deployment location information of a satellite on which a beam is located.

In a possible design, the second satellite covers the terminal earlier than the first satellite, and when there is a communication link between the first satellite and the core network device, there is also a communication link between the second satellite and the core network device.

In a possible design, when there is the communication link between the first network element and the core network device, the first network element sends the third information to the core network device.

According to a third aspect, this application provides a communication method. The method includes: A first network element receives a first identifier and a first message from a first access device, where the first message is used by a terminal to request registration with a network, the first identifier is used to trigger the first network element to allocate a second identifier to the terminal, and the first network element and the first access device are located on a first satellite. The first network element allocates the second identifier to the terminal based on the first identifier and information about the first satellite, where the second identifier identifies the terminal. When there is a communication link between the first network element and a core network device, the first network element sends the first message and the second identifier to the core network device, where the core network device is located on the ground.

According to the foregoing method, it can be ensured that a registration procedure of the terminal is completed when communication links between the satellite and the terminal and between the satellite and the core network device do not exist simultaneously. In this case, the first network element can allocate the second identifier to the terminal even if the first network element does not have a NAS message parsing capability, and the core network device can determine, with reference to a plurality of types of information, a next satellite to serve the terminal, thereby improving message forwarding efficiency and shortening the duration of the registration procedure.

In a possible design, before the first network element allocates the second identifier to the terminal based on the first identifier and an identifier of the first satellite, the first network element determines that a quantity of terminals that have accessed the first satellite is less than a preset threshold.

In a possible design, the information about the first satellite includes one or more of the identifier of the first satellite, an identifier of the first network element, an identifier of the first access device, or a prefix address pool corresponding to the first satellite.

In a possible design, the first network element allocates storage space to the terminal, where the storage space is used to save an uplink message from the terminal and/or a downlink message to the terminal, and the storage space corresponds to the second identifier.

In a possible design, the first network element receives a second message and the second identifier that are sent by the core network device; the first network element saves the second message based on the first identifier; and when there is a communication link between the first network element and the terminal, the first network element sends the second message to the terminal.

In the foregoing design, the first network element may forward the message based on the second identifier.

In a possible design, the first network element sends the second identifier to the terminal; the first network element receives a third message and the second identifier from the terminal; the first network element saves the third message based on the first identifier; and when there is the communication link between the first network element and the core network device, the first network element sends the third message to the core network device.

In the foregoing design, the first network element may forward the message based on the second identifier.

In a possible design, the first identifier is a cell-radio network temporary identifier C-RNTI.

In a possible design, when there is the communication link between the first network element and the terminal, the first network element sends information about a first timer to the terminal, where the first timer indicates a duration in which the terminal is in a sleep state.

In a possible design, when there is the communication link between the first network element and the core network device, the first network element further sends a remaining value of the first timer to the core network device.

According to a fourth aspect, this application provides a communication method. The method includes: A core network device receives a first message and a second identifier from a first network element, where the second identifier indicates a terminal, the first network element is located on a first satellite, and the core network device is located on the ground. The core network device determines a second satellite, where the second satellite is a next satellite to serve the terminal, where the core network device determines the second satellite based on ephemeris information and location information of the terminal; or the core network device sends ephemeris information and location information of the terminal to a compute device, and the core network device receives indication information from the compute device, where the indication information indicates the second satellite. The core network device sends a second message and the second identifier to a second network element based on the first message, where the second network element is located on the second satellite.

According to the foregoing method, the core network device may determine the next satellite to serve the terminal, and forward, via the satellite, a message that needs to be sent to the terminal.

In a possible design, the core network device receives a remaining value of a first timer from the first network element, where the first timer indicates a duration in which the terminal is in a sleep state; the core network device determines the second satellite based on the ephemeris information and the location information of the terminal; and the core network device determines the second satellite based on the ephemeris information, the location information of the terminal, and the remaining value of the first timer.

In the foregoing design, the core network device may determine, with reference to the remaining value of the first timer, the next satellite to serve the terminal.

In a possible design, the core network device receives a remaining value of a first timer from the first network element, where the first timer indicates a duration in which the terminal is in a sleep state; and the core network device further sends the remaining value of the first timer to the compute device.

In a possible design, the second network element supports store-and-forward.

In a possible design, the core network device receives capability information of the second network element from the second network element, where the capability information of the second network element indicates that the second network element supports store-and-forward.

In a possible design, the second satellite covers the terminal earlier than the first satellite, and when there is a communication link between the first satellite and the core network device, there is also a communication link between the second satellite and the core network device.

In a possible design, the first message is used by the terminal to request registration with the core network device, and the second message is a response message to the first message.

In a possible design, the core network device receives capability information of the first network element from the first network element, where the capability information of the first network element indicates that the first network element supports store-and-forward.

According to a fifth aspect, this application provides a communication apparatus. The communication apparatus may be a first apparatus, or may be a module or a unit (for example, a chip, a chip system, or a circuit) that is in the first apparatus and that performs, in one-to-one correspondence, the method/operations/steps/actions described in any one of the first aspect to the fourth aspect, or may be used in conjunction with the first apparatus.

According to a sixth aspect, this application provides a communication device, including at least one processing element and at least one storage element. The at least one storage element is configured to store a program and data. The at least one processing element is configured to read and execute the program and the data that are stored in the storage element, so that the method according to any one of the first aspect to the fourth aspect of this application is implemented.

According to a seventh aspect, this application further provides a computer program. When the computer program is run on a computer, the computer is enabled to perform the method according to any one of the first aspect to the fourth aspect.

According to an eighth aspect, this application provides a communication apparatus. The apparatus includes an interface circuit and at least one processor. The interface circuit is configured to provide an input and/or output of a program or instructions for the at least one processor. The at least one processor is configured to execute the program or the instructions, so that the communication apparatus can implement the method according to any one of the first aspect to the fourth aspect.

In a possible manner, the communication apparatus includes at least one memory, and the at least one memory is configured to store the program or the instructions.

According to a ninth aspect, this application provides a computer storage medium. The storage medium stores a software program, and when the software program is read and executed by one or more processors, the method according to any one of the first aspect to the fourth aspect may be implemented.

According to a tenth aspect, this application provides a computer program product including instructions. When the instructions are run on a computer, the computer is enabled to perform the method according to any one of the first aspect to the fourth aspect.

According to an eleventh aspect, this application provides a chip system. The chip system includes at least one chip and a memory. The at least one chip is configured to read and execute a program stored in the memory, to implement the method according to any one of the first aspect to the fourth aspect.

According to a twelfth aspect, this application provides a communication system. The system includes a first network element, a terminal, a first access network device, and a core network device. The terminal performs the method according to any one of the implementations of the first aspect, the first network element performs the method according to either the second aspect or the third aspect, and the core network device performs the method according to any one of the implementations of the fourth aspect.

### BRIEF DESCRIPTION OF DRAWINGS

FIG. 1A is a diagram of a 5G network architecture based on a service-based architecture;
FIG. 1B is a diagram of an architecture of a 4G network system;
FIG. 2 is a diagram of a structure of a satellite network;
FIG. 3A is a diagram in which communication links between a satellite and a terminal and between the satellite and a core network device exist simultaneously;
FIG. 3B is a diagram in which communication links between a satellite and a terminal and between the satellite and a core network device exist simultaneously;
FIG. 4A is an overview flowchart of a communication method;
FIG. 4B is an overview flowchart of another communication method;
FIG. 5 is an overview flowchart of still another communication method;
FIG. 6A(a) and FIG. 6A(b) are a flowchart 1 of initial registration in a 4G scenario;
FIG. 6B is a flowchart 1 of initial registration in a 4G scenario;
FIG. 7A(a) and FIG. 7A(b) are a flowchart 2 of initial registration in a 4G scenario;
FIG. 7B is a flowchart 2 of initial registration in a 4G scenario;
FIG. 8A and FIG. 8B are a flowchart 3 of initial registration in a 4G scenario;
FIG. 9A(a) and FIG. 9A(b) are a flowchart 1 of initial registration in a 5G scenario;
FIG. 9B(a) and FIG. 9B(b) are a flowchart 1 of initial registration in a 5G scenario;
FIG. 10A to FIG. 10C are a flowchart 2 of initial registration in a 5G scenario;
FIG. 11 is a flowchart of a session establishment process;
FIG. 12 is a diagram of a structure of a communication apparatus; and
FIG. 13 is a diagram of a structure of a communication apparatus.

### DESCRIPTION OF EMBODIMENTS

The following describes specific implementations of this application by using examples with reference to the accompanying drawings in embodiments of this application. However, the implementations of this application may further include a combination of these embodiments without departing from the spirit or scope of this application. For example, other embodiments may be used and structural changes may be made. Therefore, the detailed description of the following embodiments should not be understood in a restrictive sense. Terms used in embodiments of this application are merely used to describe specific embodiments of this application, but are not intended to limit this application.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or may be applied to a future communication system or another similar communication system.

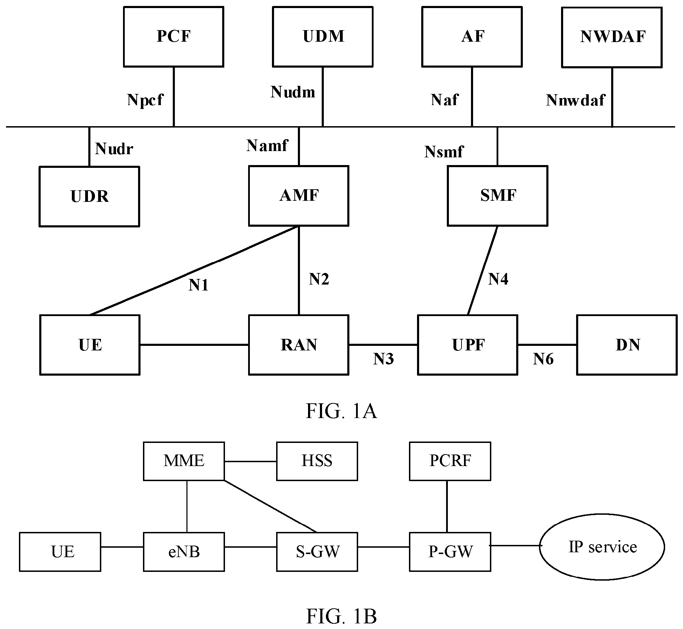

FIG. 1A is a diagram of a 5G network architecture based on a service-based architecture. The 5G network architecture shown in FIG. 1A may include a terminal device, an access device, and a core network device. The terminal device accesses a data network (data network, DN) via the access device and the core network device. The core network device includes a plurality of network functions (network functions, NFs) or network elements, for example, includes some or all of the following network elements: a unified data management (unified data management, UDM) network element, a unified data repository (unified data repository, UDR) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and the like.

A terminal may also be referred to as a terminal device. The terminal device may include various handheld devices, vehicle-mounted devices, wearable devices, compute devices that have a wireless communication function, or other processing devices connected to a wireless modem. The terminal device may also be referred to as a terminal. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS) machine, customer-premises equipment (customer-premises equipment, CPE), a machine type communication (machine type communication, MTC) terminal, a communication device mounted on a high-altitude airplane, a wearable device, an uncrewed aerial vehicle, a robot, a terminal in D2D, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a satellite-specific terminal, a terminal device in a future communication network, or the like.

The access device may also be referred to as an access network device or a base station, that is, a radio access network (radio access network, RAN) device. The RAN can manage radio resources and provide an access service for the user equipment, to complete forwarding of user equipment data between the user equipment and a core network. The RAN may alternatively be understood as a base station in a network.

For example, the access device in embodiments of this application may be any communication device with a wireless transceiver function for communication with the user equipment. The access device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission reception point, TRP), or the like. Alternatively, the access device may be a gNB or a transmission point (TRP or TP) in a 5G mobile communication system like an NR system, or one antenna panel or one group of antenna panels (including a plurality of antenna panels) of a base station in the 5G mobile communication system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access device may be a device including one or more of a CU node, a DU node, or an AAU node. In addition, the CU may be classified as an access device in an access network, or the CU may be classified as an access device in the core network (core network, CN). This is not limited in this application.

The data network is configured to provide, for example, an operator service, an internet access service, or a third-party service, and includes a server, where a server side implements video source encoding, rendering, and the like.

The following briefly describes some core network devices.
1. A user plane network element serves as an interface to a data network, and completes functions such as user plane data forwarding, session/flow level-based charging statistics collection, and bandwidth throttling, that is, packet routing and forwarding, quality of service (quality of service, QoS) handling for user plane data, and the like.
2. An access and mobility management function network element is mainly used for mobility management, access management, and the like. In addition, the access and mobility management function network element is further responsible for transferring a user policy between a terminal and a PCF network element.
3. A session management network element is mainly used for session management, and is used for session management after user access, including PDU session establishment, modification, activation, deactivation, release, and the like, and includes functions such as execution of session management, execution of a control policy delivered by a PCF, UPF selection, and internet protocol (internet protocol, IP) address allocation for a terminal device.
4. A policy control network element is mainly configured to: govern network behaviors by using a unified policy framework, provide policy rules to a control plane function (AMF or SMF), and access subscription information relevant for policy decisions in a UDR.
5. A unified data management network element is mainly used for generation of authorization credentials, and unified management on data related to functions such as subscription information-based access authorization, serving NF registration management, and subscription information management.
6. A unified data repository network element is mainly used for storage and retrieval of subscription data by a UDM, storage and retrieval of policy data by a PCF, storage of structured data for capability exposure, and storage of application data for application detection.

FIG. 1B is a diagram of a 4G network architecture. The 4G network architecture shown in FIG. 1B may include a terminal device (for example, UE), an access device (for example, an eNB), a core network device, and the like.

An S-GW is a local access gateway of a user terminal, a P-GW is a gateway for the user terminal to access an external data network, and a policy and charging rules function (policy and charging rules function, PCRF) unit is a control node for QoS and charging policies. A function of a home subscriber server (home subscriber server, HSS) is similar to a function of a UDM network element, a function of the serving gateway (serving gateway, S-GW) and a function of the packet data network (packet data network, PDN) gateway (PDN gateway, P-GW) are similar to a function of a UPF network element, an access control and mobility management function of an MME is similar to a function of an AMF, and a function of the PCRF is similar to a function of a PCF.

It may be understood that, the foregoing network elements are an example of an implementation. This application does not exclude that a network element or a device having the function of the foregoing network element has another name or another form in a future wireless communication system.

It may be understood that, the foregoing network elements or functions may be network elements in a hardware device, may be software functions running on dedicated hardware, or may be virtualized functions instantiated on a platform (for example, a cloud platform). In a possible implementation method, the foregoing network elements or functions may be implemented by one device, may be jointly implemented by a plurality of devices, or may be implemented by a functional module in one device. This is not specifically limited in embodiments of this application.

In FIG. 1, Nudr, Npcf, Namf, Nudm, and Nsmf are service-based interfaces respectively provided by the UDR, the PCF, the AMF, the UDM, and the SMF, and are for invoking corresponding service-based operations.

The following briefly describes technical terms in this application.

### 1. Ephemeris information

An ephemeris (ephemeris), also referred to as an ephemeris table, calendar, almanac, or the like, is information used to locate a celestial body at any moment. The ephemeris information refers to some information related to a satellite constellation, and generally, may include three-dimensional space location information of a satellite, speed state vector information, information about an orbit in which the satellite is located, and the like. Specifically, the information may be classified into a location and a speed state vector of the satellite, orbital plane parameters (orbital plane parameters), satellite level parameters (satellite level parameters), and the like. For example, basic elements (parameters) included in a satellite ephemeris provided by a 3rd generation partnership project (3rd generation partnership project, 3GPP) RAN working group at the RAN2#108 meeting are shown in Table 1 below.

**Table 1**

| | | |
|---|---|---|
| Orbital plane parameters (orbital plane parameters) | $\sqrt{α}$ | Square root of semi-major axis (square root of semi-major axis (semi-major axis)) |
| | e | Eccentricity (eccentricity) |
| | i0 | Inclination angle at reference time (inclination angle at reference time (inclination)) |
| | Ω0 | Longitude of ascending node of orbit plane (longitude of ascending node of orbit plane (right ascension of the ascending node)) |
| | ω | Argument of perigee (argument of perigee (argument of periapsis)) |
| Satellite level parameters (satellite level parameters) | M0 | Mean anomaly at reference time (mean anomaly at reference time (true anomaly and a reference point in time)) |
| | T₀ₑ | Epoch (the epoch) |

The ascending node is a point of intersection between the satellite and the equatorial plane of the earth when the satellite passes through the equatorial plane of the earth from south to north. The argument of perigee is an angle from the ascending node to the perigee on the orbital plane of the satellite in a satellite movement direction. A value of the argument of perigee is a degree ranging from 0 to 360 degrees.

It should be understood that Table 1 is merely an example for describing some specific parameters that may be included in the ephemeris parameters. In embodiments of this application, the ephemeris information may not include one or more of the foregoing parameters, or may include another type of parameter. Specific content of the ephemeris information is not limited in embodiments of this application.

It should be further understood that in embodiments of this application, the ephemeris information may also be referred to as an ephemeris parameter, a satellite ephemeris parameter, a satellite ephemeris parameter in a satellite access network, a satellite ephemeris parameter in a satellite backhaul, or another possible name. This is not limited in this application.

The ephemeris information occupies a large amount of storage space. Generally, the ephemeris information is preconfigured. In some embodiments of this application, preconfigured ephemeris information may be provided for a network element on a satellite or a network element on the ground.

### 2. Ground coverage information

The ground coverage information is also referred to as satellite ground coverage information, satellite coverage information, satellite reachability information, satellite availability information, satellite coverage availability information, or the like. The ground coverage information may represent a ground area that can be covered by a signal of a satellite. For example, the ground coverage information may include a time point at which one or more satellites cover each of one or more areas (for example, a grid point, a matrix area map, and a service area range), or a time period in which one or more satellites cover the area. For example, for a first service area and a first satellite that can cover the area, the ground coverage information includes information about a time point at which the first satellite covers the first service area, and the time point may be a start time point at which the first satellite enters the first service area and a duration of coverage, or information about a time period in which the first satellite covers the first service area.

The ground coverage information of the satellite may be determined based on ephemeris information, that is, there is a mapping relationship between the ephemeris information and the ground coverage information. For example, ground coverage information 1 of a satellite A may be determined based on ephemeris information 1 of the satellite A.

### 3. Connection information of a feeder link

The connection information of the feeder link may also be referred to as feeder information for short. The feeder information is used to describe a status of a signal channel between an on-board network element (for example, an on-board RAN or an on-board store and forward (store and forward, S&F) function) and a gateway station (ground station), for example, whether the signal channel is unavailable. When both transmitted and received signals can reach each other, the signal channel is considered unavailable. When at least one of the transmitted signal and the received signal fails to reach the other party, the signal channel is considered available.

In a possible implementation of embodiments of this application, the feeder information may be signal strength information. For example, when an on-board RAN receives a signal from a gateway station, and the signal strength increases to reach a specified threshold, it may be considered that a signal channel between the on-board RAN and the gateway station is unavailable, or a satellite enters an area covered by the gateway station. When an on-board RAN senses that the signal strength from a gateway station decreases below a specified threshold, it may be considered that a signal channel between the on-board RAN and the gateway station is available, or a satellite leaves (or moves out of) an area covered by the gateway station. Further, the on-board RAN may send, to an on-board apparatus such as an on-board S&F through an internal connection/interface of the satellite, information about whether the channel of the feeder link is unavailable or available.

In another possible implementation of embodiments of this application, alternatively, the feeder information may be sensed by an on-board router (router) or an on-board S&F. When a feeder link between a satellite and a gateway station performs laser communication, the router or the on-board S&F may sense a laser communication status on the link, and then send, to an on-board apparatus such as an on-board RAN through an internal connection/interface of the satellite, sensed information about whether a channel of the feeder link is unavailable or available.

In this application, one or more on-board devices may be simultaneously deployed on one satellite. For example, a network element (for example, an on-board S&F) having a store and forward function and an access device (for example, an on-board RAN) may be deployed on one satellite. The network element having a store and forward function and the access device may be disposed together or separately. In other words, the store and forward function may be understood as a function having some functions of the access device, while having an expanded and enhanced storage capability. Alternatively, a network element having a store and forward function may be understood as a core network device. For example, the network element having a store and forward function may alternatively have some functions of a mobility management entity (mobility management entity, MME) or an AMF network element, or some functions of a UPF network element or an S-GW network element.

In the following, only an example in which the network element having a store and forward function is independently disposed is used for description. There is an interface between the network element having a store and forward function and the access device. The interface may support communication between the network element having a store and forward function and the access device. For example, the access device may send signaling (for example, a non-access stratum (non-access stratum, NAS) message) or data to the network element having a store and forward function, and the network element having a store and forward function may also send a stored NAS message or data to the access device.

Unless otherwise specified, in this application, both the network element having a store and forward function and the access device are deployed on a satellite. A ground core network device is referred to as a core network device for short below, and is deployed on the ground.

The network element having a store and forward function can sense air interface connection information between the access device and a terminal, and can further sense feeder information between the satellite and a ground gateway station. In other words, the network element having a store and forward function can determine whether there is a communication link between the satellite and the terminal or between the satellite and the core network device. Alternatively, it may be described as that the network element having a store and forward function can determine whether the satellite can normally communicate with the terminal or the core network device.

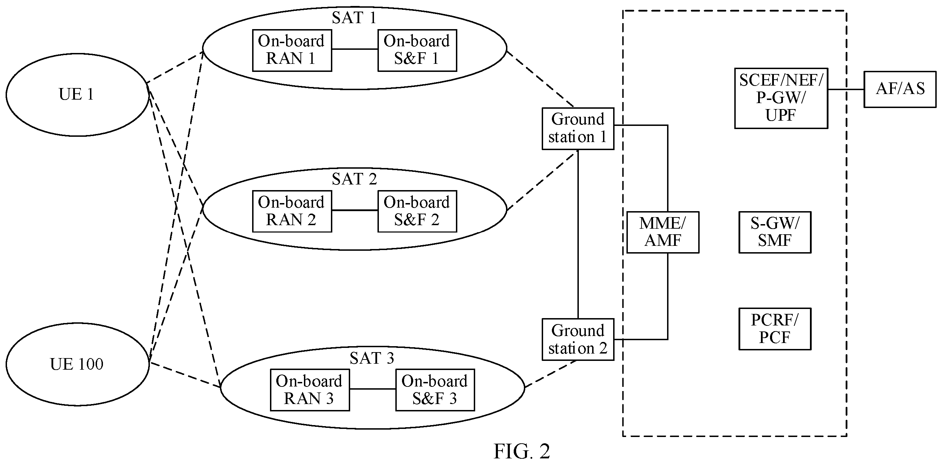

As shown in FIG. 2, an on-board RAN 1 and an on-board S&F 1 are deployed on a satellite 1. An on-board RAN 2 and an on-board S&F 2 are deployed on a satellite 2. An on-board RAN 3 and an on-board S&F 3 are deployed on a satellite 3. The satellite 1, the satellite 2, and the satellite 3 can determine whether there is a communication link with any one of UE 1 to UE 100. The satellite 1, the satellite 2, and the satellite 3 can also determine whether there is a communication link with either a ground station 1 or a ground station 2. The ground station, that is, a ground gateway station, is also referred to as a gateway station, may also be referred to as a satellite gateway (also referred to as a transport or hub), and is configured to connect a satellite and a ground network.

Generally, each terminal may communicate with one satellite that covers the terminal. If a plurality of satellites cover the terminal, the terminal generally communicates with only one satellite. If at least one satellite covers a gateway station connected to a core network device, the core network device may be connected to one or more gateway stations, and the core network device may communicate with some or all of the at least one satellite.

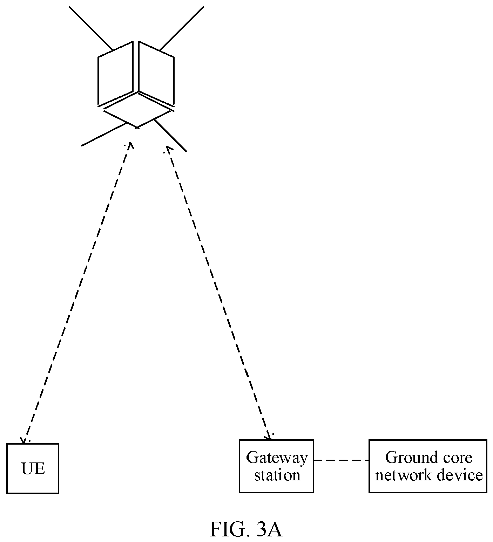

As shown in FIG. 3A, when communication links between a satellite and a terminal (for example, UE 1) and between the satellite and a core network device (for example, an MME) exist simultaneously, the satellite may forward, to the core network device, signaling or data received from the terminal, and forward, to the terminal, signaling or data received from the core network device.

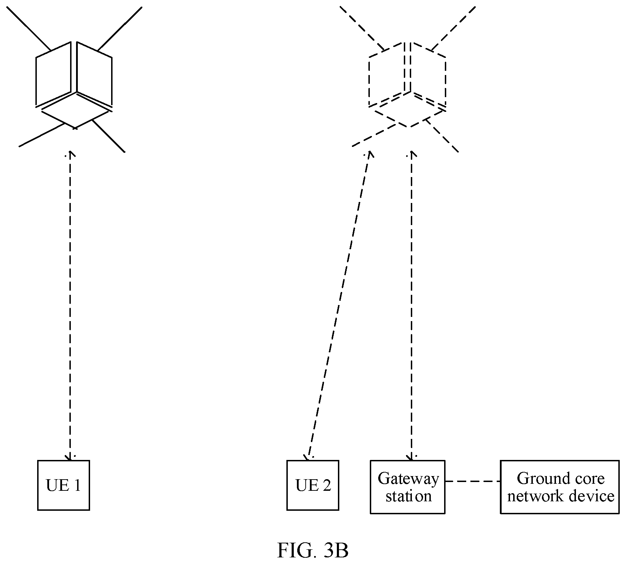

As shown in FIG. 3B, communication links between a satellite and a terminal and between the satellite and a core network device (or a gateway station) do not exist simultaneously. It may also be described as that there is only one of the links between the satellite and the terminal and between the satellite and the core network device (or the gateway station).

As shown in FIG. 3B, communication links between a satellite and UE 1 and between the satellite and a core network device do not exist simultaneously. However, communication links between a satellite and UE 2 and between the satellite and a core network device exist simultaneously. In this application, that communication links between a satellite and a terminal and between the satellite and a core network device do not exist simultaneously means that for a terminal, when a satellite covers the terminal, the satellite does not simultaneously cover the core network device. Therefore, a message sent by the terminal to the core network device cannot be forwarded to the core network device in time via the satellite. When the satellite covers the core network device, the satellite cannot simultaneously cover the terminal, but the satellite may cover another terminal. Therefore, a message sent by the core network device to the terminal cannot be forwarded to the terminal in time via the satellite.

For example, when there is a communication link between the satellite and the terminal and there is no communication link between the satellite and the core network device, the satellite (for example, a network element having a store and forward function deployed on the satellite) may receive signaling or data from the terminal via an access device, and store received content. As the satellite rotates, when there is a communication link between the satellite and the core network device and there is no communication link between the satellite and the terminal, the satellite may forward the stored content to the core network device.

Similarly, when there is a communication link between the satellite and the core network device and there is no communication link between the satellite and the terminal, the satellite may further receive signaling or data from the core network device, and store received content. As the satellite rotates, when there is a communication link between the satellite and the terminal and there is no communication link between the satellite and the core network device, the satellite may forward the stored content to the terminal via the access device.

The network element having a store and forward function may parse received signaling, that is, has a capability of parsing the signaling. For example, the network element may have a capability of parsing a NAS message. Alternatively, the network element having a store and forward function does not parse received signaling, that is, does not have a capability of parsing the signaling. For example, the network element only transparently transmits a NAS message but does not parse the NAS message.

That communication links between a satellite and a terminal and between the satellite and a core network device do not exist simultaneously may also be understood as follows: Coverage that can be provided by the satellite can simultaneously cover both the terminal and the core network device, but a link between the satellite and the terminal or a link between the satellite and the gateway station is abnormal. For example, a communication link between the satellite and the terminal is normal, but a communication link between the satellite and the core network device is faulty; or a communication link between the satellite and the terminal is faulty, but a communication link between the satellite and the core network device is normal.

Based on the foregoing network system architecture and content described in the foregoing related technologies, embodiments of this application provide several possible communication methods. Entities in the communication methods include a terminal, a first network element, a first access device, a core network device, and the like. For example, the terminal may be any one of the UE 1 to the UE 100 in FIG. 2. The first network element may be the on-board S&F in FIG. 2, the first access device is the on-board RAN in FIG. 2, and the core network device is the MME or the AMF in FIG. 2. In addition, it should be understood that the foregoing entity may alternatively be replaced with a communication apparatus having a corresponding entity function or a chip, a unit, or a module in the communication apparatus having the corresponding entity function. For example, the terminal may alternatively be replaced with a communication apparatus having a terminal function, or a chip, a unit, or a module in the communication apparatus having the terminal function. In the following embodiments, the first network element and the first access device are located on a first satellite. A second network element and a second access device are located on a second satellite. Core network devices such as the MME and the AMF are located on the ground.

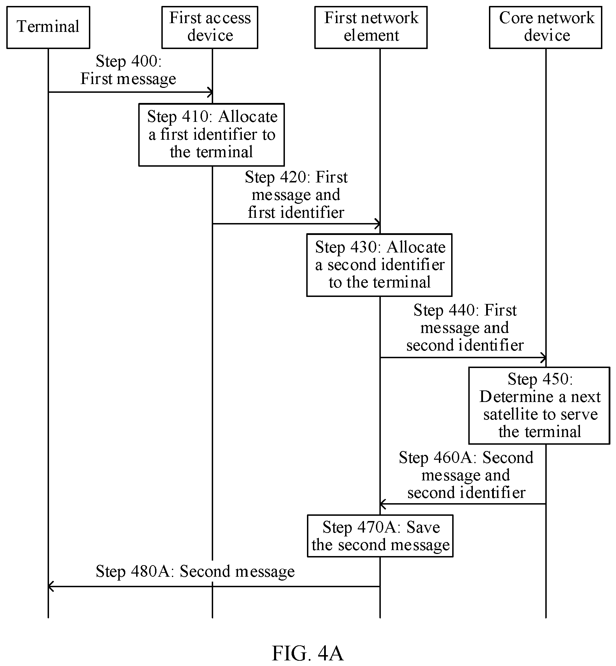

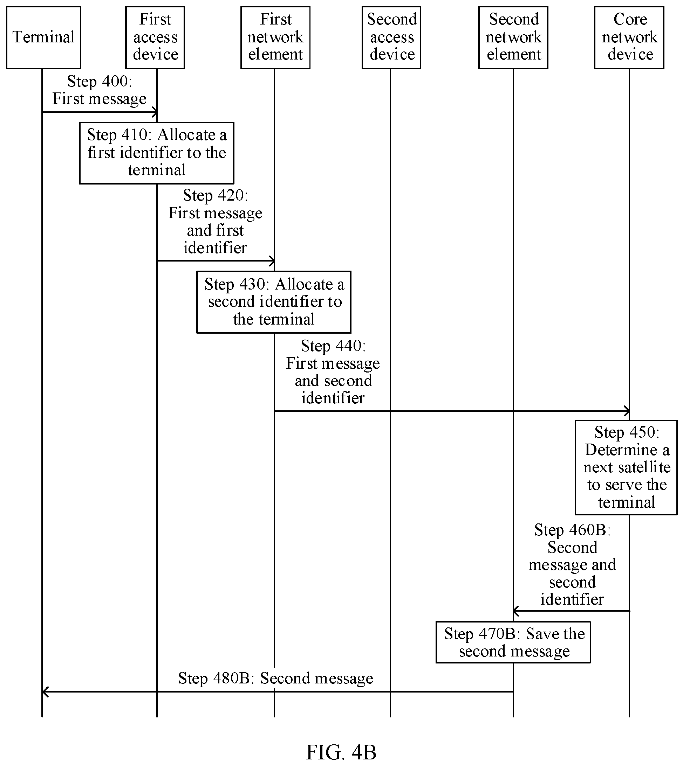

This application provides a communication method, to complete a registration procedure of a terminal when communication links between a satellite and the terminal and between the satellite and a core network device do not exist simultaneously. As shown in FIG. 4A and FIG. 4B, the method includes:

Step 400: A terminal sends a first message to a first access device.

The first message is used by the terminal to request registration with a network. For example, the first message is a NAS message.

For example, the first message is an attach request, and the attach request includes one or more of an international mobile subscriber identity (international mobile subscriber identity, IMSI), capability information of the terminal, and location information of the terminal.

For another example, the first message is a registration request, and an attach message includes a subscription concealed identifier (subscription concealed identifier, SUCI), capability information of the terminal, location information of the terminal, and the like.

The capability information of the UE may indicate whether the terminal supports a network element having a store and forward function.

Step 410: The first access device allocates a first identifier to the terminal. The first identifier is used to trigger a first network element to allocate a second identifier to the terminal.

For example, the first identifier identifies a terminal that accesses the first access device. For example, the first identifier identifies a terminal in a cell of the first access device, and the terminal is in a random access success state. For example, the first identifier is a cell-radio network temporary identifier (cell-radio network temporary identifier, C-RNTI).

Step 420: The first access device sends the first identifier and the first message to the first network element.

Step 430: The first network element allocates the second identifier to the terminal based on the first identifier and information about a first satellite, where the second identifier identifies the terminal.

The second identifier is a unique identifier identifying the terminal in a satellite network in which the first network element is located. In addition, the second identifier may further reduce exposure of the IMSI or the SUCI, and improve communication security.

It may be understood that the first identifier may be a unique identifier identifying the terminal in a single access device. For example, a first identifier allocated by the first access device to UE 1 is different from a first identifier allocated by the first access device to UE 2, but the first identifier allocated by the first access device to the UE 1 may be the same as a first identifier allocated by a second access device to UE 3. Therefore, the first access device needs to notify the first network element to allocate the second identifier to the terminal.

For example, the information about the first satellite includes one or more of an identifier of the first satellite, an identifier of the first network element, an identifier of the first access device, or a prefix address pool corresponding to the first satellite.

In a possible implementation, if the information about the first satellite includes at least one of the identifier of the first satellite, the identifier of the first network element, and the identifier of the first access device, the first network element may determine the second identifier based on the first identifier and the information about the first satellite. The first network element may further save a correspondence between the first identifier and the second identifier.

For example, if the information about the first satellite includes the identifier of the first satellite, the second identifier may be determined based on the first identifier and the identifier of the first satellite. For example, the second identifier=the first identifier + the identifier of the first satellite.

In a possible implementation, if the information about the first satellite includes the prefix address pool corresponding to the first satellite, the first network element determines, based on the first identifier, to allocate the second identifier to the terminal, and selects an unallocated prefix address from the prefix address pool as the second identifier.

The prefix address pool corresponding to the first satellite may also be referred to as a prefix address segment corresponding to the first satellite, or may be referred to as a terminal identifier range interval corresponding to the first satellite or an address pool corresponding to the first satellite. The prefix address pool corresponding to the first satellite may be preconfigured. Different satellites correspond to different prefix address pools, to ensure that the second identifier identifies only one terminal, that is, an identifier allocated by the first satellite (for example, the first network element) does not conflict with an identifier allocated by another satellite (for example, a network element having a store and forward function on the another satellite). For example, each satellite (that is, a network element having a store and forward function on each satellite) may maintain an allocated prefix address and/or an unallocated prefix address, so that a prefix address subsequently allocated to another terminal does not conflict with the allocated prefix address.

In addition, in a possible implementation, before the first network element allocates the second identifier to the terminal, the first network element may further determine whether a quantity of terminals that have accessed the first satellite is less than a preset threshold. If the quantity of accessed terminals is greater than or equal to the preset threshold, the first network element may send a reject message to the terminal, and after receiving the reject message, the terminal may wait for another satellite to serve the terminal. If the quantity of accessed terminals is less than the preset threshold, the first network element may allocate the second identifier to the terminal.

The quantity of accessed terminals may be understood as a quantity of terminal entries stored in the first network element, a quantity of second identifiers allocated by the first network element, or a quantity of terminals that established RRC connections to the first access device. The quantity of stored terminal entries may also be understood as a quantity of terminals to which stored messages belong. For example, the first network element stores a message 1, a message 2, and a message 3, where the message 1 and the message 2 are from the UE 1, and the message 3 is from the UE 2. In this case, the quantity of stored terminal entries is 2.

In a possible implementation, after the first network element allocates the second identifier to the terminal, the first network element further allocates storage space to the terminal, where the storage space is used to save an uplink message from the terminal and/or a downlink message to the terminal, and the storage space corresponds to the second identifier. For example, the first network element saves the first message in the storage space corresponding to the terminal.

In addition, after the first network element allocates the second identifier to the terminal, the first network element may further send the second identifier to the terminal. The terminal saves the second identifier. Further, the terminal may send a third message and the second identifier to the first network element. The first network element saves the third message based on the second identifier. For example, the first network element saves, based on the second identifier, the third message in the storage space corresponding to the terminal. When there is a communication link between the first network element and a core network device, the first network element may further send the third message to the core network device. That there is the communication link between the first network element and the core network device may be understood as that as the first satellite moves, the first satellite does not cover the terminal, and the first satellite covers the core network device.

It may be understood that before the first satellite cannot cover the terminal, the first network element may receive one or more messages from the terminal. For example, the first network element may receive the first message, or the first network element may receive a first message and a third message of a same terminal. When the first network element receives a plurality of messages, the first network element sequentially saves the plurality of messages, that is, saves the plurality of messages based on a sequence in which the messages arrive at the first network element. For example, the plurality of messages are sequentially saved in the storage space corresponding to the terminal. When there is the communication link between the first network element and the core network device, the first network element may sequentially send the saved messages to the core network device.

For example, the first network element first receives the first message, and then receives the third message. When there is the communication link between the first network element and the core network device, the first network element may first send the first message to the core network device, and then send the third message.

For example, the first message is a first registration request message, the third message is a second registration request message, and the second registration request message may be a supplement to the first registration request message. For example, the second registration request message may include all parameters required in a registration procedure, or the second registration request message is a supplementary message of the first registration request message, that is, includes a parameter that is not included in the first registration request message, and the first registration request message and the second registration request message jointly form all the parameters required in the registration procedure.

In addition, in a possible implementation, the first network element may further send capability information of the first network element and/or information about a first timer to the terminal.

The capability information of the first network element indicates that the first network element supports store-and-forward. The first timer indicates a duration in which the terminal is in a sleep state. Based on the received capability information of the first network element or the information about the first timer, the terminal is to be in the sleep state, that is, to remain silent and not send a message, and may select whether to listen to a broadcast message released by the satellite. In addition, the first timer may alternatively be understood as an estimated duration in which the terminal needs to wait or suspend, or a duration in which the terminal waits to send a message again when the terminal is connected to the satellite next time. For example, the duration indicated by the first timer may be determined based on time for the first satellite to move to a gateway station or time for the satellite to move to an area in which the terminal is located next time. When there is the communication link between the first network element and the core network device, the first network element may further send a remaining value of the first timer to the core network device.

Step 440: When there is the communication link between the first network element and the core network device, the first network element sends the first message and the second identifier to the core network device.

In the foregoing process, the first network element allocates the second identifier to the terminal, and forwards the first message and the second identifier from the terminal to the core network device when there is the communication link between the first network element and the core network device. The second identifier identifies the terminal, and may be used in the entire registration process.

Step 450: The core network device determines a next satellite to serve the terminal.

In a possible implementation, the core network device may directly determine that the next satellite to serve the terminal is still the first satellite.

In another possible implementation, the core network device determines, based on ephemeris information and the location information of the terminal, the next satellite to serve the terminal. Alternatively, the core network device sends the location information of the terminal to a compute device (for example, a satellite management platform). Optionally, the core network device may further send time information, for example, time at which the core network device receives the first message, to the compute device, so that the compute device provides information about a satellite, calculated based on the time information and the location information, that can serve the terminal. The core network device receives indication information from the compute device, where the indication information indicates the next satellite to serve the terminal.

For example, the core network device may calculate, based on the ephemeris information and the location information of the terminal, a satellite that can cover the terminal at the fastest speed in at least one satellite currently connected to the core network device, and use the satellite as the next satellite to serve the terminal.

The next satellite to serve the terminal may still be the first satellite, or the next satellite to serve the terminal is a second satellite, where the second satellite is different from the first satellite.

For example, the core network device may further receive the remaining value of the first timer from the first network element, and the core network device may determine the second satellite based on the ephemeris information, the location information of the terminal, and the remaining value of the first timer. Alternatively, the core network device may further send the remaining value of the first timer to the compute device.

For example, the core network device may calculate, based on the ephemeris information, the location information of the terminal, and the remaining value of the first timer, a satellite that first covers the terminal after the first timer expires, and use the satellite as the next satellite to serve the terminal.

In addition, the core network device may further determine a plurality of candidate satellites. For example, the first network element obtains, through calculation, first X satellites that can cover the terminal at the fastest speed, or calculates first Y satellites that first cover the terminal after the first timer expires. X and Y are positive integers. Further, the core network device may select, from the plurality of candidate satellites with reference to a plurality of factors, one satellite as the next satellite to serve the terminal.

Factor a: Whether a network element having a store and forward capability is deployed on the satellite.

In an example, the core network device may learn of, based on preconfigured information, satellites on which network elements having a store and forward capability deployed. Further, if there are a plurality of candidate satellites, the core network device selects, based on the preconfigured information, a satellite on which a network element having a store and forward capability is deployed as the next satellite to serve the terminal.

In another example, the core network device may receive capability information of a second network element from the second network element, where the capability information of the second network element indicates that the second network element supports store-and-forward. The second network element is located on the second satellite, and the plurality of candidate satellites include the second satellite. Further, the core network device may select, based on the received capability information of the second network element, the second satellite as the next satellite to serve the terminal.

Factor b: Whether the satellite covers the terminal earlier than the first satellite.

It may be understood that the satellite that covers the terminal earlier than the first satellite can forward, to the terminal more quickly, a second message determined by the core network device.

Factor c: Whether a storage resource is greater than a storage resource of the first satellite.

It should be noted that the foregoing factors may be used separately or in combination. The foregoing factors are merely examples and are not intended to limit this application.

For example, the next satellite to serve the terminal is the second satellite. The second satellite covers the terminal earlier than the first satellite, and when there is a communication link between the first satellite and the core network device, there is also a communication link between the second satellite and the core network device. When there is the communication link between the first satellite and the core network device, there is also the communication link between the second satellite and the core network device. This can ensure that the second satellite can receive the second message and the second identifier that are sent by the core network device.

For example, the next satellite to serve the terminal is the second satellite. A storage resource of the second satellite is greater than the storage resource of the first satellite, and when there is a communication link between the first satellite and the core network device, there is also a communication link between the second satellite and the core network device.

For example, the next satellite to serve the terminal is the second satellite. The second satellite covers the terminal earlier than the first satellite, the storage resource of the second satellite is greater than the storage resource of the first satellite, and when there is a communication link between the first satellite and the core network device, there is also a communication link between the second satellite and the core network device.

As shown in FIG. 4A, the following step 460A to step 480A correspond to a scenario in which the core network device determines that the next satellite to serve the terminal is the first satellite.

Step 460A: The core network device sends the second message and the second identifier to the first network element based on the first message.

For example, the second message is a response message to the first message. For example, the second message may include one or more of the following: the second identifier or a third identifier, a UE network capability, an encryption algorithm, an integrity algorithm, an authentication vector, a satellite identifier, an HSS/UDM identifier, an evolved packet system (evolved packet system, EPS) bearer identifier (EPS bearer identifier, EBI), an S1-U or S11-U tunnel endpoint identifier (tunnel endpoint identifier, TEID), and information such as an IP, an APN, a UE IP, and quality of service (quality of service, QoS).

Step 470A: The first network element saves the second message based on the second identifier.

Step 480A: When there is a communication link between the first network element and the terminal, the first network element sends the second message to the terminal. In addition, the second identifier may be further sent.

For example, before the first network element sends the second message to the terminal, the first satellite may page the terminal, or the terminal may resend the first message to the first network element.

That there is the communication link between the first network element and the terminal may be understood as that as the first satellite moves, the first satellite does not cover the core network device, and the first satellite covers the terminal.

For a subsequent message forwarding procedure, refer to the following Example 1. Details are not described herein.

As shown in FIG. 4B, the following step 460B to step 480A correspond to a scenario in which the core network device determines that the next satellite to serve the terminal is the second satellite.

Step 460B: The core network device sends the second message and the second identifier to the second network element based on the first message, where the second network element is located on the second satellite.

Step 470B: The second network element saves the second message.

For example, the second network element further allocates corresponding storage space to the terminal, and the storage space corresponding to the terminal corresponds to the second identifier.

Step 480B: When there is a communication link between the second network element and the terminal, the second network element sends the second message to the terminal. In addition, the second identifier may be further sent.

For example, before the second network element sends the second message to the terminal, the second satellite may page the terminal, or the terminal may resend the first message to the second network element.

For details of a subsequent message forwarding procedure, refer to the following Example 2 and/or Example 4. Details are not described herein.

According to the foregoing method, it can be ensured that a registration procedure of the terminal is completed when communication links between the satellite and the terminal and between the satellite and the core network device do not exist simultaneously. In this case, the first network element can allocate the second identifier to the terminal even if the first network element does not have a NAS message parsing capability, and the core network device can determine, with reference to a plurality of types of information, the next satellite to serve the terminal, thereby improving message forwarding efficiency and shortening the duration of the registration procedure.

This application further provides a communication method, to enable a terminal to enter a sleep state in time when communication links between a satellite and the terminal and between the satellite and a core network device do not exist simultaneously, so that power consumption of the terminal can be reduced.

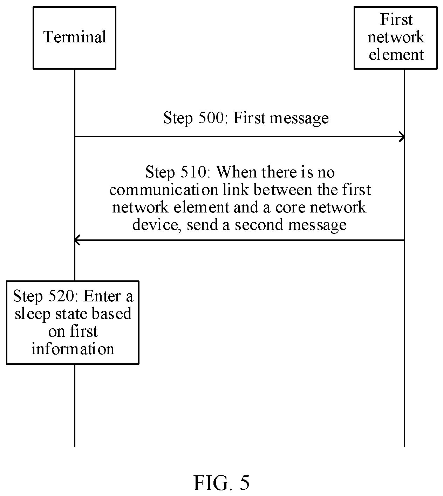

As shown in FIG. 5, the method includes the following steps.

Step 500: A terminal sends a first message to a first network element, where the first network element is located on a first satellite.

For example, the first message may be a NAS message or uplink data.

Step 510: When there is no communication link between the first network element and a core network device, the first network element sends a second message to the terminal, where the second message includes first information, and the first information is used to trigger the terminal to enter a sleep state.

For example, the first information is capability information of the first network element, and the capability information of the first network element indicates that the first network element supports store-and-forward.

Alternatively, the first information indicates that there is no feeder information between the first network element and the core network device. It may also be understood as that the first information indicates that there is no communication link between the first network element and the core network device.

Alternatively, the first information indicates that the first message is not forwarded (or delivered) but is stored (or saved).

Alternatively, if the first message is a first registration request message, the first information may further indicate that a registration procedure is paused and requires waiting or indicate that the registration procedure is suspended.

In addition, before the first network element sends the second message to the terminal, the first network element may determine, based on information such as a message type of the first message or a service type in the first message, a delay requirement of a service initiated by the first message. If the delay requirement is low, the first satellite sends the second message to the terminal.

Step 520: The terminal enters the sleep state based on the first information.

According to the foregoing method, the terminal enters the sleep state based on the second message without repeatedly sending the first message, thereby reducing power consumption of the terminal.

It may be understood that before the terminal enters the sleep state, and when the first satellite covers the terminal, the terminal may further send one or more messages, so that the first network element stores the one or more messages for the terminal.

In a possible implementation, if the first message is the first registration request message, before the terminal enters the sleep state, the terminal may further send a second registration request message to the first network element based on the first information.

For example, if the first information is the capability information of the first network element, and the terminal learns that the first network element supports store-and-forward, the terminal may send, to the first network element based on a second registration request message, a registration parameter that needs to be sent. For example, the second registration request message may include all parameters required in the registration procedure, or the second registration request message is a supplementary message of the first registration request message, that is, includes a parameter that is not included in the first registration request message, and the first registration request message and the second registration request message jointly form all the parameters required in the registration procedure.

In another possible implementation, the first network element may determine second information based on the first registration request message, where the second information is used to trigger reporting of at least one parameter. The second message may further include the second information. If the first message is the first registration request message, before the terminal enters the sleep state, the terminal may send a second registration request message to the first network element based on the second information, where the second registration request message includes the at least one parameter.

For example, the first network element may determine the second information based on a parameter that is not included in the first registration request message, and the first registration request message and the second registration request message jointly form all parameters required in the registration procedure. The terminal sends the second registration request message based on the second information. The second registration request message may include all the parameters required in the registration procedure, or include only the at least one parameter indicated by the second information. This is not limited in this application.

It may be understood that the first message may alternatively be a first attach request message.

In addition, when the first satellite does not serve the terminal, or the first satellite is to not cover the terminal, the first network element may send a third message to the terminal, where the message indicates that the first satellite does not serve the terminal or the first satellite leaves an area in which the terminal is located. In this way, the terminal may enter the sleep state based on the message.

For example, after the first network element receives the second registration request message from the terminal, the first network element sends the third message to the terminal. In this case, the third message may further indicate that the second registration request message is saved. The third message may alternatively be understood as a response message or a default reply of the second registration request message.

The second message or the third message may further include information about a first timer. The first timer indicates a duration in which the terminal is in the sleep state.

The terminal may start the first timer after receiving the third message. For related content of the first timer, refer to related descriptions in the embodiments shown in FIG. 4A and FIG. 4B. Details are not described herein again.

It should be noted that the terminal in the sleep state may select to listen to a broadcast message or not listen to the broadcast message, but the terminal does not actively resend the first message or another message. However, after the sleep state ends, or after the terminal enters a state in which the terminal can actively send a message again, or after the terminal is restored to an active state or an activated state, or after the first timer expires, the terminal resends the first message. For example, after the first timer expires, if there is an air interface link of a satellite, after the terminal detects that the satellite sends, through an air interface, a broadcast message carrying public land mobile network (public land mobile network, PLMN) information, and the broadcast PLMN information matches PLMN information of the terminal, the terminal may resend the first message.

Further, before the first satellite leaves the area in which the terminal is located, if the first network element saves a plurality of messages, the first network element may further process these messages.

In an example, if the plurality of messages are NAS messages, the first network element may combine the plurality of messages into one message.

For example, if the first network element saves the first registration request message and the second registration request message, when there is a communication link between the first network element and the core network device, the first network element may send a third registration request message to the core network device, where the third registration request message is determined based on the first registration request message and the second registration request message.

In another example, if the first satellite further saves a first authorization parameter (or a first authentication parameter) from the core network device and receives a second authorization parameter (or a second authentication parameter) from the terminal, the first network element may further determine whether the two authorization parameters are consistent.

For example, the first network element saves an expected response (expected response, XRES) from the core network device (for example, an MME) and receives a response (response, RES) from the terminal, and the first network element may determine whether the two responses are the same.

In addition, in a possible implementation, the first network element determines third information based on at least one of ephemeris information, location information of the terminal, and receive beam information of the first message. The third information is used to determine a second satellite, and the second satellite is a next satellite to serve the terminal. The second message further includes the third information. In addition, when there is the communication link between the first network element and the core network device, the first network element sends the third information to the core network device.

For example, the third information includes at least one of an identifier of a second network element, an identifier of the second satellite, or an identifier of another device located on the second satellite, the second network element is located on the second satellite, and the second network element supports store-and-forward. The receive beam information includes at least one of receive moment information, a beam angle, a beam identifier, or physical deployment location information of a satellite on which a beam is located.

It may be understood that the first network element may alternatively determine a plurality of candidate satellites, and select, from the plurality of candidate satellites, one satellite as the next satellite to serve the terminal. For details about how to select, refer to related content about a plurality of factors in the embodiments shown in FIG. 4A and FIG. 4B. Details are not described herein again.

Further, the terminal may receive a broadcast message, where the broadcast message indicates a satellite that covers the terminal. For example, the terminal may receive the broadcast message in the sleep state, or receive the broadcast message after the first timer expires, or receive the broadcast message after the sleep state ends. The terminal may determine, based on the third information, whether the satellite indicated by the broadcast message is the second satellite. If the satellite indicated by the broadcast message is the second satellite, the terminal may resend the first message to the second network element, where the second network element is located on the second satellite. If the satellite indicated by the broadcast message is not the second satellite, the terminal may not send the first message, and continue to listen to the broadcast message.

For example, if the second message further includes the third information, and the first network element also notifies the core network device of the third information, the core network device may send, to the second network element based on the third information, a message sent to the terminal. When the second satellite moves to the area in which the terminal is located, the second satellite may send the broadcast message, where the broadcast message indicates the second satellite. For example, the broadcast message includes the identifier of the second satellite. The terminal may receive the broadcast message. If the terminal determines, based on the identifier of the second satellite in the third information, that the identifier of the second satellite is the same as the identifier of the satellite in the broadcast message, the terminal may resend the first message to the second network element, and may further receive a message from the core network device stored in the second network element.

The following further describes the embodiments shown in FIG. 4A, FIG. 4B, and FIG. 5 with reference to specific examples. The terminal corresponds to UE 1, and the first access device is a first RAN.

Example 1: Initial registration procedure 1 in a 4G scenario. A first network element and a first RAN are located on a first satellite, and the first network element is a network element having a store and forward function, and does not have a capability of parsing a NAS message.

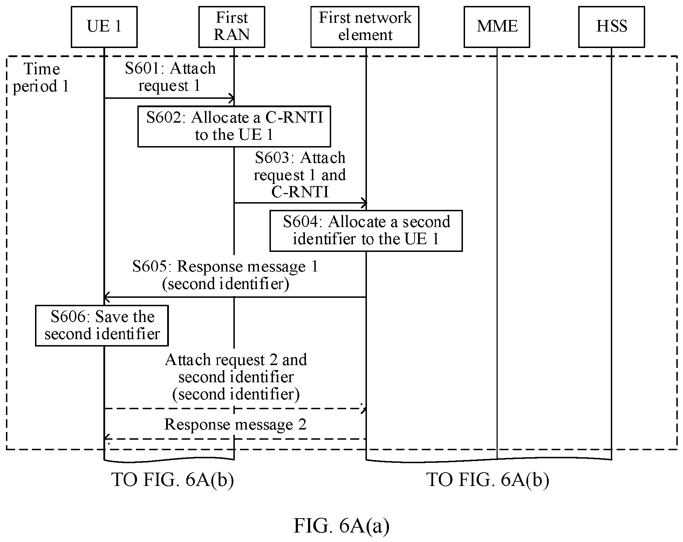

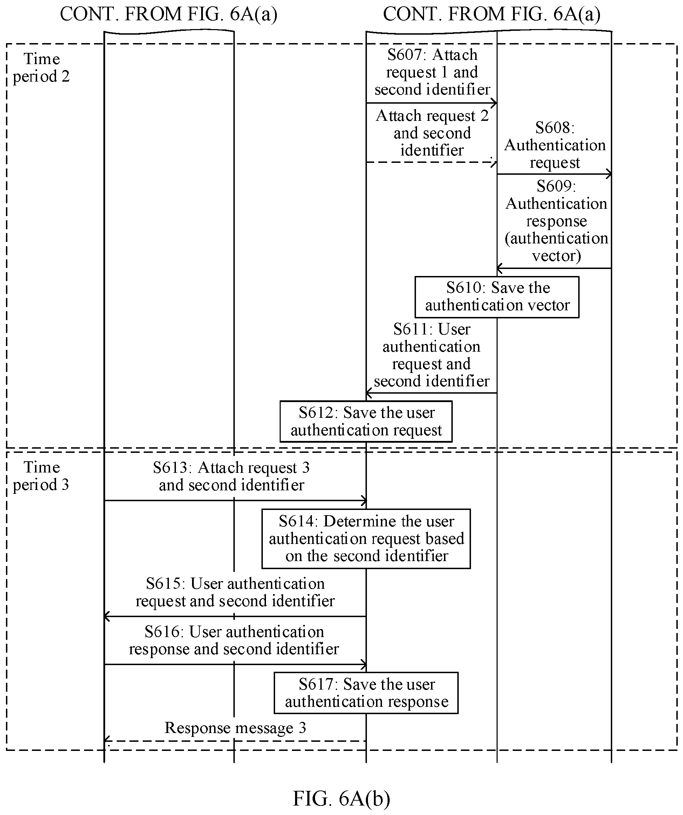

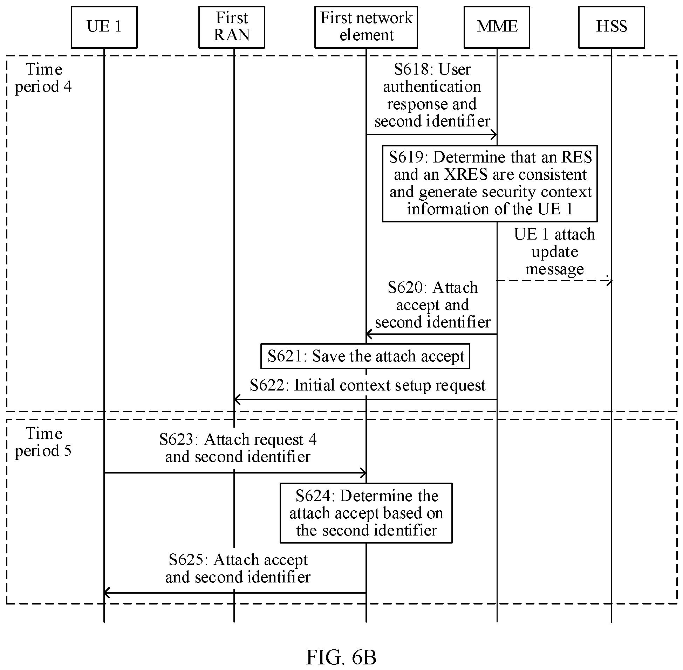

As shown in FIG. 6A(a) and FIG. 6A(b) and FIG. 6B, the following attach procedure may be divided into several phases:

Time period 1: The first satellite is not connected to a gateway station above UE 1. In this case, there is a communication link between the first network element and the UE 1, and there is no communication link between the first network element and an MME.

S601: The UE 1 sends an attach (attach) request 1 to the first RAN.

For example, the UE 1 sends the attach request 1 to the first RAN.

The attach (attach) request 1 is a NAS message. The NAS message includes an IMSI, capability information of the UE 1, and the like. Optionally, the NAS message further includes any one or more of an access point name (access point name, APN), an additional update type (additional update type), and location information of the UE 1.

For example, the capability information of the UE 1 may further indicate whether the UE 1 supports a network element having a store and forward function.

S602: The first RAN allocates a C-RNTI to the UE 1.

S603: The RAN sends the attach request 1 and the C-RNTI to the first network element.

S604: The first network element allocates a second identifier to the UE 1 based on the C-RNTI and information about the first satellite.

For details, refer to step 420. Details are not described herein again.

S605: The first network element sends a response message 1 to the UE 1 via the first RAN.

The response message 1 may be a reply to the attach request 1, and the response message 1 includes the second identifier. The second identifier identifies the UE 1, and may further represent that the attach request 1 of the UE 1 is stored, or represent that the attach request 1 of the UE 1 is received by a satellite network.

In addition, optionally, the response message 1 may further include first information and/or information about a timer 1.

The first information is capability information of the first network element, and the capability information of the first network element indicates that the first network element supports store-and-forward. Alternatively, the first information indicates that the attach request 1 is not forwarded (or delivered) but is stored (or saved), or indicates that the attach procedure is paused and requires waiting, or indicates that the attach procedure is suspended. Alternatively, the first information indicates that there is no feeder information between the first network element and the core network device, or there is no communication link between the first network element and the core network device. Alternatively, the first information indicates that the first satellite is to leave space above the UE 1.

For example, the timer 1 may be understood as a duration in which the UE 1 enters a sleep state. For example, the UE 1 may enter the sleep state within the duration, that is, remain silent and not send a message, and may select whether to listen to a broadcast message released by the satellite.

The timer 1 may alternatively be understood as an estimated duration in which the UE 1 needs to wait or suspend, or a duration in which the UE 1 waits to send a message (for example, an attach request) again when the UE 1 is connected to the satellite next time. For example, the timer 1 may be denoted as Timer 1. For example, the duration of the timer 1 may be determined based on time for the first satellite to move to a gateway station or time for the satellite to move to an area in which the UE 1 is located next time.

S606: After receiving the response message 1, the UE 1 saves the second identifier.

For example, if the response message 1 further includes the first information, the UE 1 may enter the sleep state based on the first information.

For example, if the response message 1 further includes the information about the timer 1, the UE 1 may start the timer 1, and remain in the sleep state before the timer 1 expires.

In addition, in a possible implementation, before the UE 1 enters the sleep state based on the first information, the UE 1 may further send the second identifier and an attach request 2. The attach request 2 is a NAS message. The attach request 2 may include all parameters required in the registration procedure, or the attach request 2 is a supplementary message of the attach request 1, that is, includes a parameter that is not included in the attach request 1, and the attach request 1 and the attach request 2 jointly form all the parameters required in the registration procedure.

For example, the NAS message in the attach request 1 includes the IMSI and the capability information of the UE 1, and the NAS message in the attach request 2 includes the APN and the location information of the UE 1.

For another example, the NAS message in the attach request 1 includes the IMSI and the capability information of the UE 1, and the NAS message in the attach request 2 includes the IMSI, the capability information of the UE 1, the APN, and the location information of the UE 1.

Correspondingly, the first network element sequentially stores, based on the second identifier, the attach request 2 in storage space corresponding to the UE 1.

After sending the attach request 2, the UE 1 enters the sleep state, and starts the timer 1.

Optionally, after the first network element receives the attach request 2, the first network element may further send a response message 2. The response message 2 includes the information about the timer 1, or indicates the timer 1 to start, or the response message 2 indicates that the first satellite does not serve the UE 1.

Time period 2: The first satellite moves above the gateway station and is not connected to the UE 1. In other words, as the first satellite rotates around the earth, the first satellite leaves above the area in which the UE 1 is located, and the first satellite arrives above an area in which the gateway station is located, where the gateway station can communicate with the MME. In this case, there is no communication link between the first network element and the UE 1, and there is a communication link between the first network element and the MME.

S607: The first network element sends the attach request 1 and the second identifier to the MME.

For example, the first network element senses that the MME is reachable, and sequentially forwards stored messages from the UE 1 to the MME.

For example, if the UE 1 sends only the attach request 1, the first network element sends the attach request 1 and the second identifier to the MME.

For another example, if the UE 1 sends the attach request 1 and the attach request 2, the first network element first sends the attach request 1 and the second identifier to the MME, and then sends the attach request 2 and the second identifier.

In addition, the first network element may further send the capability information of the first network element to the MME.

S608: The MME sends an authentication request to an HSS, where the authentication request includes an IMEI.

S609: The HSS sends an authentication response to the MME.

The authentication response includes an authentication vector, and the authentication vector includes information such as an authorization token (authentication token, AUTN), a random number (random, RAND), a Kasme, and an expected response (expected response, XRES). The authentication vector is determined based on the IMEI in the authentication request.

S610: The MME saves the authentication vector.

In addition, the MME further saves the attach request 1 and the attach request 2.

S611: The MME sends a user authentication request and the second identifier to the first network element.

The user authentication request is a NAS message. The NAS message includes the AUTN and the RAND.

S612: The first network element saves the user authentication request.

For example, the first network element saves, based on the second identifier, the user authentication request in the storage space corresponding to the UE 1.

Time period 3: The first satellite is not connected to the gateway station above the UE 1. In other words, as the first satellite rotates around the earth, the first satellite leaves above an area in which the MME is located, and the first satellite arrives above the area in which the UE 1 is located again. In this case, there is a communication link between the first network element and the UE 1, and there is no communication link between the first network element and an MME.

S613: The UE 1 sends an attach request 3 and the second identifier.

For example, if the foregoing response message 1 includes the information about the timer 1, after the timer 1 expires, the UE 1 may resend an attach request, for example, the attach request 3, to a detected satellite.

S614: The first network element determines the user authentication request based on the second identifier.

S615: The first network element sends the user authentication request and the second identifier to the UE 1.

For example, if the first network element receives the attach request 3 and the second identifier, the first network element determines, based on the second identifier, the storage space corresponding to the UE 1, and sends the user authentication request saved in the storage space to the UE 1.

S616: The UE 1 sends a user authentication response and the second identifier to the first network element.

The user authentication response is a NAS message, and the NAS message includes a response (response, RES). The UE 1 may verify validity of the AUTN in the user authentication request, and then calculate the RES based on the RAND and a Key (a long-term key previously preset in the UE 1).

S617: The first network element saves the user authentication response.

For example, the first network element saves, based on the second identifier, the user authentication response in the storage space corresponding to the UE 1.

In addition, optionally, when the first satellite moves out of the space above the UE 1 (or the area in which the UE 1 is located), the first network element may further send a response message 3 to the UE 1, where the response message 3 includes the second identifier and the information about the timer 1. The UE 1 may be in the sleep state before the timer 1 expires. The timer 1 herein may be the same as or different from the timer 1 in S605. Herein, only an example in which the two timers 1 are the same is used for description.

Time period 4: The first satellite is above the gateway station and is not connected to the UE 1. In other words, as the first satellite rotates around the earth, the first satellite leaves above the area in which the UE 1 is located, and the first satellite arrives above the area in which the gateway station is located again, where the gateway station can communicate with the MME. In this case, there is no communication link between the first network element and the UE 1, and there is a communication link between the first network element and the MME.

S618: The first network element sends the user authentication response and the second identifier to the MME.

For example, the first network element senses that the MME is reachable, and sequentially forwards the stored messages from the UE 1 to the MME.

S619: The MME determines that the RES and the XRES are consistent and generates security context information of the UE 1.

Security context of the UE 1 includes a NAS key, a user plane (user plane, UP) key, and a radio resource control (radio resource control, RRC) key that are derived from the Kasme.

In addition, the MME may create, when determining that the additional update type is not received, a user plane session with the first satellite, or determine, when determining that the additional update type is received, that the user plane session with the first satellite does not need to be created.

For example, the attach request 1 or 2 may carry a parameter value. If the parameter value is 1, it represents that only a short message service (short message service, SMS) is supported, and voice is not supported. Therefore, the user plane session may not need to be created. If the parameter value is 0, the user plane session is created.

S620: The MME sends an attach accept and the second identifier to the first network element.

Optionally, the attach accept includes a third identifier, that is, an identifier allocated by the MME to the UE 1, and the MME may delete the second identifier. In addition, optionally, the attach accept may further include a timer W, and the timer W indicates the duration in which the UE 1 enters the sleep state. In other words, after the timer W expires, the UE 1 may send uplink data or uplink signaling.

In addition, the MME may further send a UE 1 attach update message to the HSS.

S621: The first network element saves the attach accept.

For example, the first network element saves, based on the second identifier, the attach accept in the storage space corresponding to the UE 1.

S622: The MME sends an initial context setup request to the first RAN.

In addition, the MME further sends at least one of control plane (control plane, CP) and UP session information, a UP key, and an RRC key to the first RAN. If there is UP or CP data subsequently, data encryption and integrity protection may be performed based on the foregoing information by using different keys.

Time period 5: The first satellite is not connected to the gateway station above the UE 1. In other words, as the first satellite rotates around the earth, the first satellite leaves above the area in which the MME is located, and the first satellite arrives above the area in which the UE 1 is located again. In this case, there is a communication link between the first network element and the UE 1, and there is a communication link between the first network element and the MME.

S623: The UE 1 sends an attach request 4.

For example, if the foregoing response message 2 includes the information about the timer 1, after the timer 1 expires, the UE 1 may resend an attach request, for example, the attach request 4, to a detected satellite.

The attach request 4 includes the second identifier.

S624: The first network element determines the attach accept based on the second identifier.

S625: The first network element sends the attach accept and the second identifier to the UE 1.

For example, the UE 1 may save the second identifier in the attach accept, and the UE 1 may further delete the second identifier.

In addition, if the attach accept may include the timer W, the UE 1 may start the timer W, and the timer W indicates the duration in which the UE 1 enters the sleep state. After the timer W expires, the UE 1 may send uplink data or uplink signaling.

Till now, the attach procedure ends.

When the UE 1 subsequently sends service data, if the UE 1 sends the service data through a CP plane, the first network element may save the service data in signaling plane storage space of the UE 1 in a form of a NAS message; and if the UE 1 sends the service data through a CP plane, the first network element may save the service data in user plane storage space of the UE 1 in an IP format. The two storage space may be indexed by using the third identifier of the UE 1 that is sent together with the service data. When the first satellite rotates to space above the gateway station again, the stored data may be forwarded to an MME/AMF on the CP plane or an S-GW or a UPF on the UP plane. It may be understood that the UE 1 may further send uplink data or signaling to another satellite. This is not limited herein.

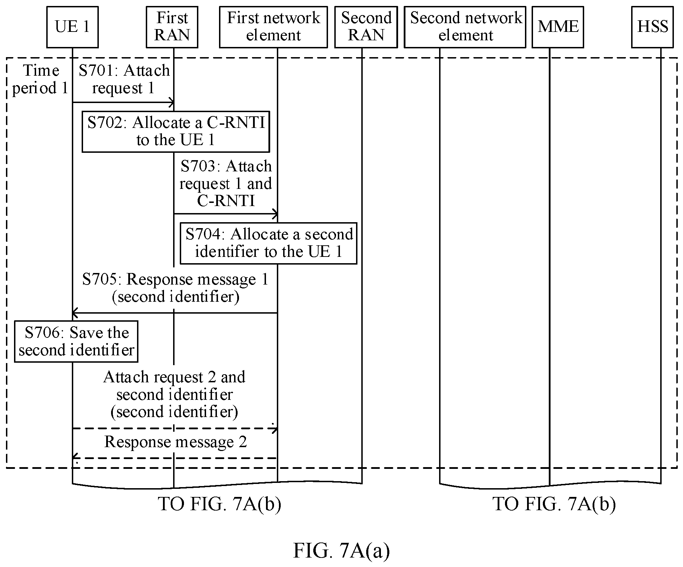

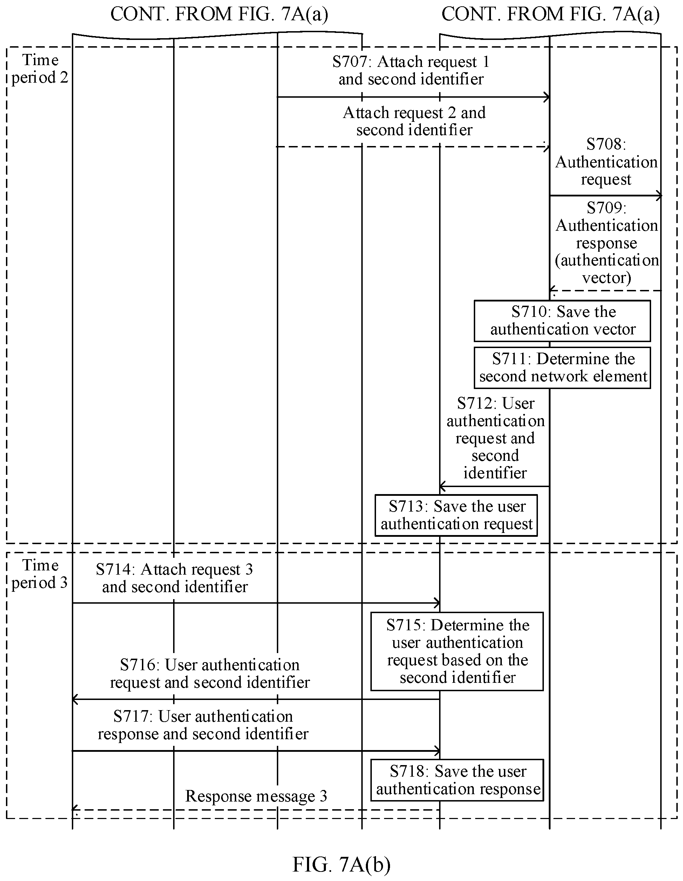

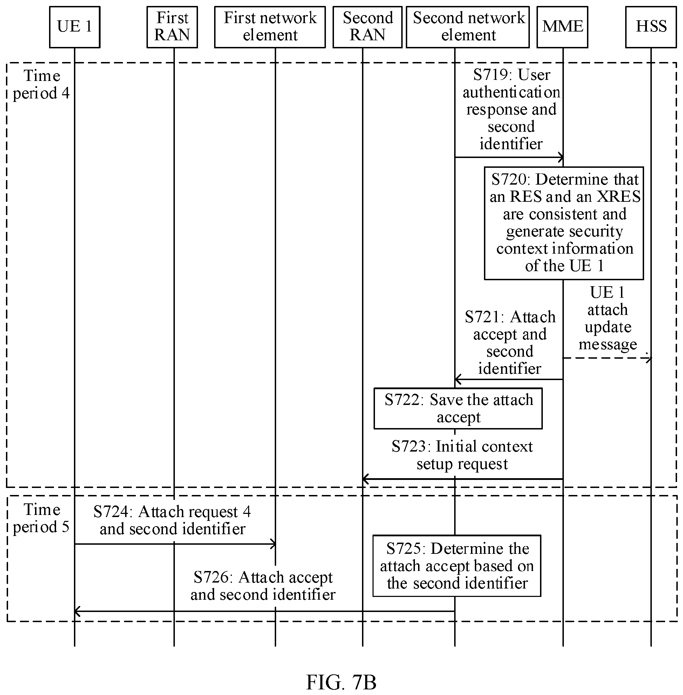

Example 2: Initial registration procedure 2 in a 4G scenario. A first network element and a first RAN are located on a first satellite, and the first network element is a network element having a store and forward function, and does not have a capability of parsing a NAS message. A second network element and a second RAN are located on a second satellite, and the second network element is a network element having a store and forward function, and does not have a capability of parsing a NAS message. Details are shown in FIG. 7A(a) and FIG. 7A(b) and FIG. 7B.

For S701 to S710, refer to S601 to S610.

S711: An MME determines the second network element.

For details, refer to step 450.

S712: The MME sends a user authentication request and a second identifier to the second network element.

The user authentication request is a NAS message. The NAS message includes an AUTN and an RAND.

S713: The second network element saves the user authentication request.

For example, the second network element allocates corresponding storage space to UE 1, and saves the user authentication request in the storage space corresponding to the UE 1. The storage space also corresponds to the second identifier.

Time period 3: The second satellite is not connected to a gateway station above the UE 1. In other words, as the second satellite rotates around the earth, the second satellite leaves above an area in which the MME is located, and the second satellite arrives above an area in which the UE 1 is located. In this case, there is a communication link between the second network element and the UE 1, and there is no communication link between the second network element and the MME.

S714: The UE 1 sends an attach request 3 and the second identifier.

For example, if the foregoing response message 1 includes a information about timer 1, after the timer 1 expires, the UE 1 may resend an attach request, for example, the attach request 3, to a detected satellite.

S715: The second network element determines the user authentication request based on the second identifier.

For example, the second network element determines, based on the second identifier received in S714, that the second identifier is the same as the second identifier saved in S713, and determines that the user authentication request in the second identifier storage space needs to be sent.

S716: The second network element sends the user authentication request and the second identifier to the UE 1.

For example, the second network element determines, based on the second identifier, the storage space corresponding to the UE 1, and sends the user authentication request saved in the storage space to the UE 1.

S717: The UE 1 sends a user authentication response and the second identifier to the second network element.

The user authentication response is a NAS message, and the NAS message includes an RES.

S718: The second network element saves the user authentication response.

For example, the second network element saves the user authentication response in the storage space corresponding to the UE 1.

In addition, optionally, when the second satellite moves out of space above the UE 1, the second network element may further send a response message 3 to the UE 1, where the response message 3 includes the second identifier and information about a timer 2. The UE 1 may be in a sleep state before the timer 2 expires.

Time period 4: The second satellite is above the gateway station and is not connected to the UE 1. In other words, as the second satellite rotates around the earth, the second satellite leaves above the area in which the UE 1 is located, and the second satellite arrives above an area in which the gateway station is located again, where the gateway station can communicate with the MME. In this case, there is no communication link between the second network element and the UE 1, and there is a communication link between the second network element and the MME.

S719: The second network element sends the user authentication response and the second identifier to the MME.

For example, the second network element senses that the MME is reachable, and sequentially forwards stored messages from the UE 1 to the MME.

S720: The MME determines that the RES and an XRES are consistent and generates security context information of the UE 1.

It may be understood that, in this case, the MME may reselect a satellite. For example, refer to step 211. The following uses only an example in which the MME still selects the second satellite for description.

S721: The MME sends an attach accept and the second identifier to the second network element.

Optionally, the attach accept includes a third identifier, that is, an identifier allocated by the MME to the UE 1, and the MME may delete the second identifier. In addition, the MME may further send the third identifier to the second network element. In addition, optionally, the attach accept may further include a timer W, and the timer W indicates a duration in which the UE 1 enters the sleep state. In other words, after the timer W expires, the UE 1 may send uplink data or uplink signaling.

In addition, the MME may further send a UE 1 attach update message to an HSS.

S722: The second network element saves the attach accept.

For example, the second network element saves, based on the second identifier, the attach accept in the storage space corresponding to the UE 1.

S723: The MME sends an initial context setup request to the first RAN.

Time period 5: The second satellite is not connected to the gateway station above the UE 1. In other words, as the first satellite rotates around the earth, the second satellite leaves above the area in which the MME is located, and the second satellite arrives above the area in which the UE 1 is located again. In this case, there is a communication link between the second network element and the UE 1, and there is a communication link between the second network element and the MME.

S724: The UE 1 sends an attach request 4 and the second identifier.

For example, if the foregoing response message 2 includes the information the timer 2, after the timer 2 expires, the UE 1 may resend an attach request, for example, the attach request 4, to a detected satellite.

S725: The second network element determines the attach accept based on the second identifier.

S726: The second network element sends the attach accept and the second identifier to the UE 1.

Optionally, the UE 1 may save the third identifier in the attach accept, and the UE 1 may further delete the second identifier.

In addition, if the attach accept may include the timer W, the UE 1 may start the timer W, and the timer W indicates the duration in which the UE 1 enters the sleep state. After the timer W expires, the UE 1 may send uplink data or uplink signaling.

Till now, the attach procedure ends.

Based on the foregoing example, when the UE 1 subsequently sends service data, if the UE 1 sends the service data through a CP plane, the second network element may save the service data in signaling plane storage space of the UE 1 in a form of a NAS message; and if the UE 1 sends the service data through a UP plane, the second network element may save the service data in user plane storage space of the UE 1 in an IP format. The two storage space may be indexed by using the third identifier of the UE 1 that is sent together with the service data. When the second satellite rotates to space above the gateway station again, the stored data may be forwarded to an MME/AMF on the CP plane or an S-GW or a UPF on the UP plane. It may be understood that the UE 1 may further send uplink data or signaling to another satellite. This is not limited herein.

Example 3: Initial registration procedure 3 in a 4G scenario. A first network element and a first RAN are located on a first satellite, and the first network element is a network element having a store and forward function, and has a capability of parsing a NAS message. A second network element and a second RAN are located on a second satellite, and the second network element is a network element having a store and forward function, and has a capability of parsing a NAS message.

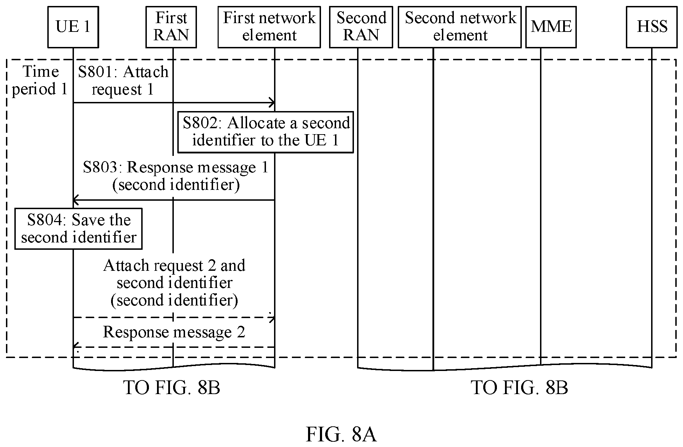

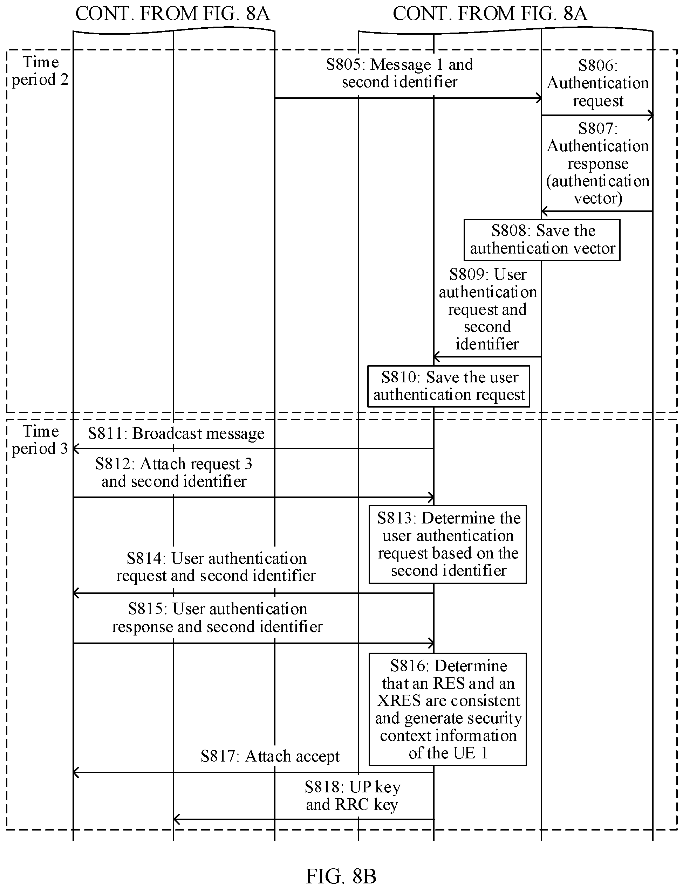

As shown in FIG. 8A and FIG. 8B, the following attach procedure may be divided into several phases:

Time period 1: The first satellite is not connected to a gateway station above UE 1. In this case, there is a communication link between the first network element and the UE 1, and there is no communication link between the first network element and an MME. The second network element and the second RAN are located on the second satellite, and the second network element is a network element having a store and forward function, and does not have a capability of parsing a NAS message.

S801: The UE 1 sends an attach request 1 to the first RAN via the first RAN.

The attach request 1 is a NAS message. The NAS message includes an IMSI, capability information of the UE 1, and the like. Optionally, the NAS message further includes any one or more of an APN, an additional update type, and location information of the UE 1.

S802: The first network element allocates a second identifier to the UE 1 based on the attach request 1 and information about the first satellite.

S803: The first network element sends a response message 1 to the UE 1 via the first RAN.

The response message 1 may be a reply to the attach request 1, and the response message 1 includes the second identifier. The second identifier identifies the UE 1.

In addition, optionally, the response message 1 may further include some or more of first information, information about a timer 1, second information, or third information. For details about the first information and the information about the timer 1, refer to the foregoing related descriptions.

For example, the first network element may determine the second information based on the attach request 1, where the second information is used to trigger reporting of at least one parameter. The attach request 1 does not include the at least one parameter.

The first network element may further receive an attach request 2 and the second identifier from the UE 1, where the attach request 2 is a NAS message. The NAS message includes the at least one parameter.

For example, the attach request 2 may include all parameters required in the registration procedure, or the attach request 2 is a supplementary message of the attach request 1, that is, includes a parameter that is not included in the attach request 1, that is, the at least one parameter, and the attach request 1 and the attach request 2 jointly form all the parameters required in the registration procedure.

In addition, in a possible implementation, the first network element generates a message 1 based on the attach request 1 and the attach request 2, and saves the message 1 in storage space corresponding to the UE 1. For example, the first network element combines the attach request 1 and the attach request 2 into one NAS message for storage.

S804: After receiving the response message 1, the UE 1 saves the second identifier.

For example, if the response message 1 further includes the first information, the UE 1 may enter a sleep state based on the first information.

For example, if the response message 1 further includes the timer 1, the UE 1 may start the timer 1, and remain in the sleep state before the timer 1 expires.

After sending the attach request 2, the UE 1 enters the sleep state, and starts the timer 1.

Optionally, after the first network element receives the attach request 2, the first network element may further send a response message 2. The response message 2 includes the timer 1, or indicates the timer 1 to start, or the response message 2 indicates that the first satellite does not serve the UE 1.

Time period 2: The first satellite moves above the gateway station and is not connected to the UE 1. In other words, as the first satellite rotates around the earth, the first satellite leaves above an area in which the UE 1 is located, and the first satellite arrives above an area in which the gateway station is located, where the gateway station can communicate with the MME. In this case, there is no communication link between the first network element and the UE 1, and there is a communication link between the first network element and the MME.

S805: The first network element sends the message 1 and the second identifier to the MME.

For example, the first network element senses that the MME is reachable, and sequentially forwards stored messages from the UE 1 to the MME.

In addition, the first network element may further send the third information to the MME.

S806: The MME sends an authentication request to an HSS, where the authentication request includes an IMEI.

S807: The HSS sends an authentication response to the MME.

The authentication response includes an authentication vector, and the authentication vector includes information such as an AUTN, an RAND, a Kasme, and an XRES. The authentication vector is determined based on the IMEI in the authentication request.

S808: The MME saves the authentication vector.

In addition, the MME further saves the attach request 1 and the attach request 2.

S809: The MME sends a user authentication request and the second identifier to the second network element based on the third information.

The user authentication request is a NAS message. The NAS message includes the AUTN and the RAND.

S810: The second network element saves the user authentication request.

For example, the second network element allocates storage space to the UE 1, and saves the user authentication request in the storage space corresponding to the UE 1. The storage space also corresponds to the second identifier.

Time period 3: The second satellite is not connected to the gateway station above the UE 1. In other words, as the second satellite rotates around the earth, the second satellite leaves above an area in which the MME is located, and the second satellite arrives above the area in which the UE 1 is located. In this case, there is a communication link between the second network element and the UE 1, and there is no communication link between the second network element and the MME.

S811: The second satellite sends a broadcast message, where the broadcast message indicates the second satellite.

If the foregoing response message 1 includes the timer 1, after the timer 1 expires, the UE 1 may receive a broadcast message sent by a satellite that covers the UE 1.

S812: The UE 1 determines, based on the third information, that the satellite indicated by the broadcast message is the second satellite, and sends an attach request 3 and the second identifier.

S813: The second network element determines the user authentication request based on the second identifier.

S814: The second network element sends the user authentication request and the second identifier to the UE 1.

For example, the second network element determines, based on the second identifier, the storage space corresponding to the UE 1, and sends the user authentication request saved in the storage space to the UE 1.

S815: The UE 1 sends a user authentication response and the second identifier to the second network element.

The user authentication response is a NAS message, and the NAS message includes an RES.

S816: The second network element determines that the RES and the XRES are consistent and generates security context information of the UE 1.

S817: The second network element sends an attach accept to the UE 1.

Optionally, the attach accept includes a third identifier, that is, an identifier allocated by the second network element to the UE 1.

S818: The second network element sends a UP key and an RRC key to the second RAN.

Till now, the attach procedure ends.

Based on the foregoing example, when the UE 1 subsequently sends service data, if the UE 1 sends the service data through a CP plane, the second network element may save the service data in signaling plane storage space of the UE 1 in a form of a NAS message; and if the UE 1 sends the service data through a UP plane, the second network element may save the service data in user plane storage space of the UE 1 in an IP format. The two storage space may be indexed by using the third identifier of the UE 1 that is sent together with the service data. When the second satellite rotates to space above the gateway station again, the stored data may be forwarded to an MME/AMF on the CP plane or an S-GW or a UPF on the UP plane. It may be understood that the UE 1 may further send uplink data or signaling to another satellite. This is not limited herein.

Example 4: Initial registration procedure 1 in a 5G scenario. A first network element and a first RAN are located on a first satellite, and the first network element is a network element having a store and forward function, and does not have a capability of parsing a NAS message.

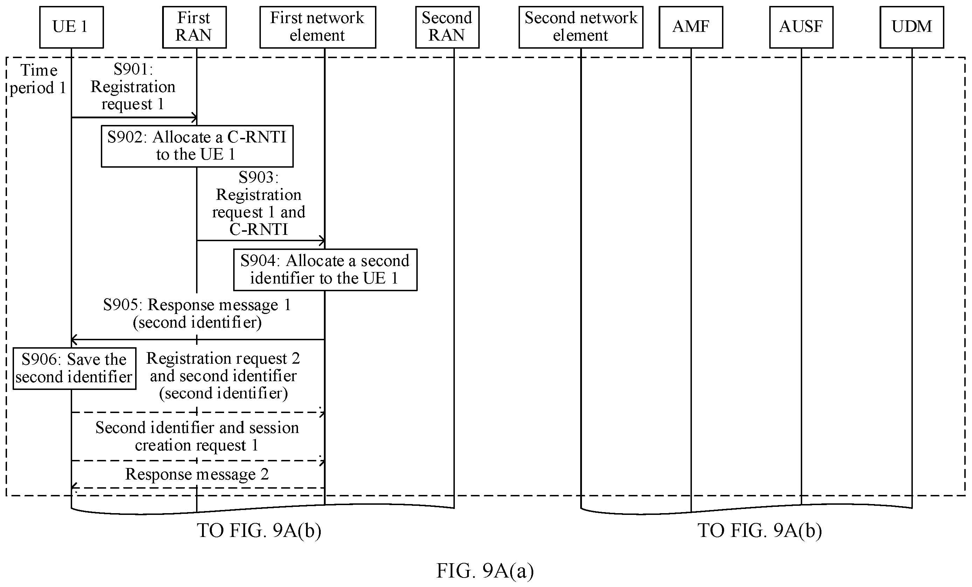

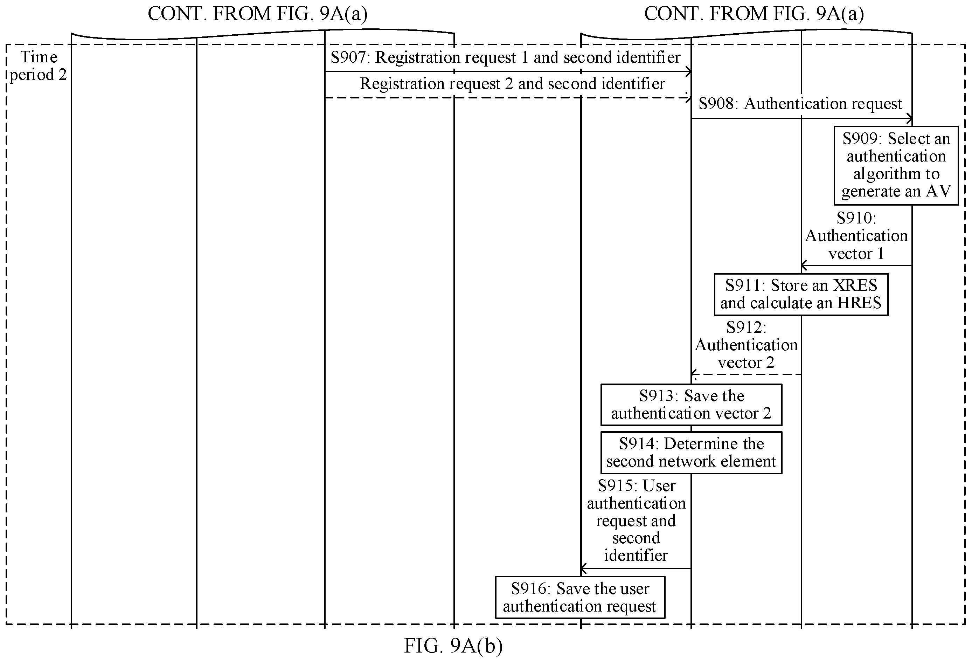

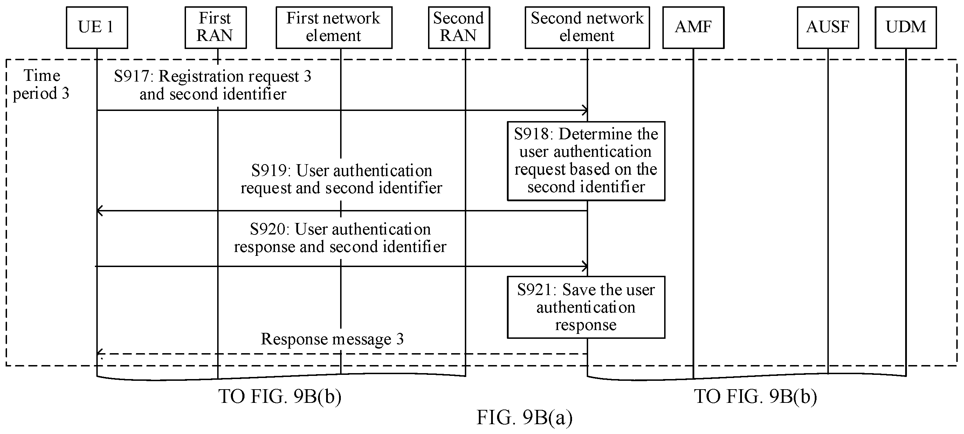

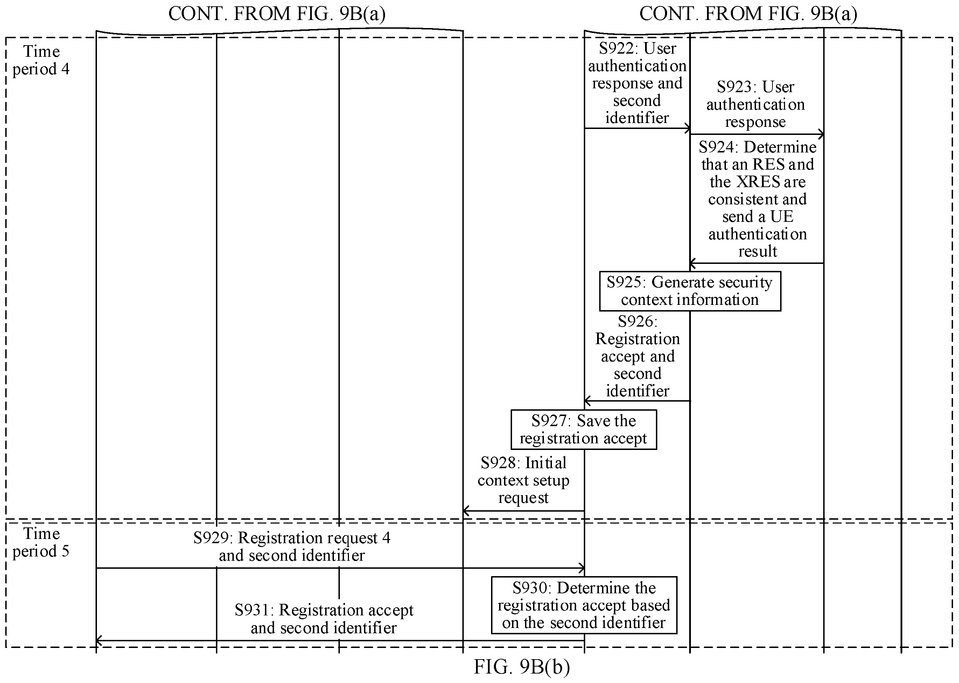

As shown in FIG. 9A(a) and FIG. 9A(b) and FIG. 9B(a) and FIG. 9B(b), the following attach procedure may be divided into several phases:

Time period 1: The first satellite is not connected to a gateway station above UE 1. In this case, there is a communication link between the first network element and the UE 1, and there is no communication link between the first network element and an AMF.

S901: The UE 1 sends a registration request 1 to the first RAN.

For example, the UE 1 sends the registration request 1 to the first RAN.

The registration request 1 is a NAS message. The NAS message includes a SUCI and the like. Optionally, the NAS message further includes any one or more of capability information of the UE 1 and location information of the UE 1.

For example, the capability information of the UE 1 may further indicate whether the UE 1 supports a network element having a store and forward function.

S902: The first RAN allocates a C-RNTI to the UE 1.

S903: The RAN sends the registration request 1 and the C-RNTI to the first network element.

S904: The first network element allocates a second identifier to the UE 1 based on the C-RNTI and an identifier of the first satellite.

For details, refer to step 410.

S905: The first network element sends a response message 1 to the UE 1 via the first RAN.

The response message 1 may be a reply to the registration request 1, and the response message 1 includes the second identifier. The second identifier identifies the UE 1.

In addition, optionally, the response message 1 may further include first information and/or information about a timer 1. For details, refer to S605.

S906: After receiving the response message 1, the UE 1 saves the second identifier.

For example, if the response message 1 further includes the first information, the UE 1 may enter a sleep state based on the first information.

For example, if the response message 1 further includes the information about the timer 1, the UE 1 may start the timer 1, and remain in the sleep state before the timer 1 expires.

In addition, in a possible implementation, before the UE 1 enters the sleep state based on the first information, the UE 1 may further send the second identifier and a registration request 2. The registration request 2 is a NAS message. The registration request 2 may include all parameters required in the registration procedure, or the registration request 2 is a supplementary message of the registration request 1, that is, includes a parameter that is not included in the registration request 1, and the registration request 1 and the registration request 2 jointly form all the parameters required in the registration procedure.

Correspondingly, the first network element sequentially stores, based on the second identifier, the registration request 2 in storage space corresponding to the UE 1.

After sending the registration request 2, the UE 1 enters the sleep state, and starts the timer 1.

Optionally, after the first network element receives the registration request 2, the first network element may further send a response message 2. The response message 2 includes the timer 1, or indicates the timer 1 to start, or the response message 2 indicates that the first satellite does not serve the UE 1.

In addition, before the UE 1 enters the sleep state based on the first information, the UE 1 may further send the second identifier and a session creation request 1. The session creation request 1 is a NAS message, and the NAS message includes a PDU session type, an APN, and the like.

Time period 2: The first satellite moves above the gateway station and is not connected to the UE 1. In other words, as the first satellite rotates around the earth, the first satellite leaves above an area in which the UE 1 is located, and the first satellite arrives above an area in which the gateway station is located, where the gateway station can communicate with the AMF. In this case, there is no communication link between the first network element and the UE 1, and there is a communication link between the first network element and the AMF.

S907: The first network element sends the registration request 1 and the second identifier to the AMF.

For example, the first network element senses that the AMF is reachable, and sequentially forwards stored messages from the UE 1 to the AMF.

For example, if the UE 1 sends the registration request 1, the registration request 2, and the session creation request 1, the first network element first sends the registration request 1 and the second identifier to the AMF, then sends the registration request 2 and the second identifier, and finally sends the session creation request 1 and the second identifier.

In addition, the first network element may further send capability information of the first network element to the AMF.

S908: The AMF sends an authentication request to a UDM via an authentication server function (authentication server function, AUSF), where the authentication request includes the SUCI.

S909: The UDM decrypts the SUCI to obtain a subscription permanent identifier (subscription permanent identifier, SUPI), and selects an authentication algorithm to generate an authentication vector (authorization vector, AV) 1.

S910: The UDM sends the authentication vector 1 to the AUSF.

The authentication vector 1 includes a 5G home environment authentication vector (5G Home Environment Authentication Vector, 5G HE AV) and the SUPI.

The 5G HE AV={RAND, XRES, AUTN, Kausf}.

S911: The AUSF stores the XRES and calculates an HRES.

S912: The AUSF sends an authentication vector 2 to the AMF.

The authentication vector 2 includes a 5G serving environment authentication vectors (5G serving environment authentication vector, 5G SE AV) and the SUPI. The 5G SE AV={RAND, AUTN, HXRES}.

In addition, the AMF further obtains more subscription information of the UE 1 from the UDM.

S913: The AMF saves the authentication vector 2.

The AMF further saves the registration request 1, the registration request 2, and the session creation request 1.

S914: The AMF determines a second network element.

For details, refer to step 450.

S915: The AMF sends a user authentication request and the second identifier to the second network element.

The user authentication request is a NAS message. The NAS message includes the 5G SE AV.

S916: The second network element saves the user authentication request.

For example, the second network element allocates corresponding storage space to the UE 1, and saves the user authentication request in the storage space corresponding to the UE 1. The storage space also corresponds to the second identifier.

Time period 3: The second satellite is not connected to the gateway station above the UE 1. In other words, as the second satellite rotates around the earth, the second satellite leaves above an area in which the AMF is located, and the second satellite arrives above the area in which the UE 1 is located. In this case, there is a communication link between the second network element and the UE 1, and there is no communication link between the second network element and the AMF.

S917: The UE 1 sends a registration request 3 and the second identifier.

For example, if the foregoing response message 1 includes the timer 1, after the timer 1 expires, the UE 1 may resend a registration request, for example, the registration request 3, to a detected satellite.

S918: The second network element determines the user authentication request based on the second identifier.

S919: The second network element sends the user authentication request and the second identifier to the UE 1.

For example, the second network element determines, based on the second identifier, the storage space corresponding to the UE 1, and sends the user authentication request saved in the storage space to the UE 1.

S920: The UE 1 sends a user authentication response and the second identifier to the second network element.

The user authentication response is a NAS message, and the NAS message includes an RES.

In addition, the UE 1 may further send a session creation request 2 to the second network element, where content of the session creation request 2 may be the same as content of the session creation request 1.

S921: The second network element saves the user authentication response.

For example, the second network element saves the user authentication response in the storage space corresponding to the UE 1.

In addition, optionally, when the second satellite moves out of space above the UE 1, the second network element may further send a response message 3 to the UE 1, where the response message 3 includes the second identifier and information about a timer 2. The UE 1 may be in the sleep state before the timer 2 expires.

Time period 4: The second satellite is above the gateway station and is not connected to the UE 1. In other words, as the second satellite rotates around the earth, the second satellite leaves above the area in which the UE 1 is located, and the second satellite arrives above the area in which the gateway station is located again, where the gateway station can communicate with the AMF. In this case, there is no communication link between the second network element and the UE 1, and there is a communication link between the second network element and the AMF.

S922: The second network element sends the user authentication response and the second identifier to the AMF.

For example, the second network element senses that the AMF is reachable, and sequentially forwards the stored messages from the UE 1 to the AMF.

S923: The AMF sends the user authentication response to the AUSF.

S924: The AUSF determines that the RES and the XRES are consistent and sends a UE authentication result to the AMF.

The UE authentication combination includes a Kamf, the SUPI, and indication information, where the indication information indicates that authentication on the UE succeeds.

S925: The AMF generates security context information of the UE 1 based on the Kamf.

In addition, the AMF may further create a session establishment procedure with different anchors based on the PDU session type and an NEF identity for NIDD in the information (for example, the session creation request message 1) from the UE.

It may be understood that, in this case, the AMF may reselect a satellite. For example, refer to step 211. The following uses only an example in which the AMF still selects the second satellite for description.

S926: The AMF sends a registration accept and the second identifier to the second network element.

Optionally, the registration accept includes a third identifier, that is, an identifier allocated by the AMF to the UE 1, and the AMF may delete the second identifier. Optionally, the attach accept may further include a timer W, and the timer W indicates a duration in which the UE 1 enters the sleep state. In other words, after the timer W expires, the UE 1 may send uplink data or uplink signaling.

S927: The second network element saves the registration accept.

For example, the second network element saves, based on the second identifier, the registration accept in the storage space corresponding to the UE 1.

S928: The AMF sends an initial context setup request to a second RAN. In addition, the AMF may further send key-related information to the second RAN.

Time period 5: The second satellite is not connected to the gateway station above the UE 1. In other words, as the first satellite rotates around the earth, the second satellite leaves above the area in which the AMF is located, and the second satellite arrives above the area in which the UE 1 is located again. In this case, there is a communication link between the second network element and the UE 1, and there is a communication link between the second network element and the AMF.

S929: The UE 1 sends a registration request 4 and the second identifier.

For example, if the foregoing response message 2 includes the timer 2, after the timer 2 expires, the UE 1 may resend a registration request, for example, the registration request 4, to a detected satellite.

S930: The second network element determines the registration accept based on the second identifier.

S931: The second network element sends the registration accept and the second identifier to the UE 1.

Optionally, the UE 1 may save the third identifier in the registration accept, and the UE 1 may further delete the second identifier.

In addition, if the attach accept may include the timer W, the UE 1 may start the timer W, and the timer W indicates the duration in which the UE 1 enters the sleep state. After the timer W expires, the UE 1 may send uplink data or uplink signaling.

Till now, the registration procedure ends.

Based on the foregoing example, when the UE 1 subsequently sends service data, if the UE 1 sends the service data through a CP plane, the second network element may save the service data in signaling plane storage space of the UE 1 in a form of a NAS message; and if the UE 1 sends the service data through a UP plane, the second network element may save the service data in user plane storage space of the UE 1 in an IP format. The two storage space may be indexed by using the third identifier of the UE 1 that is sent together with the service data. When the second satellite rotates to space above the gateway station again, the stored data may be forwarded to an MME/AMF on the CP plane or an S-GW or a UPF on the UP plane. It may be understood that the UE 1 may further send uplink data or signaling to another satellite. This is not limited herein.

Example 5: Initial registration procedure 2 in a 5G scenario. A first network element and a first RAN are located on a first satellite, and the first network element is a network element having a store and forward function, and has a capability of parsing a NAS message. A second network element and a second RAN are located on a second satellite, and the second network element is a network element having a store and forward function, and has a capability of parsing a NAS message.

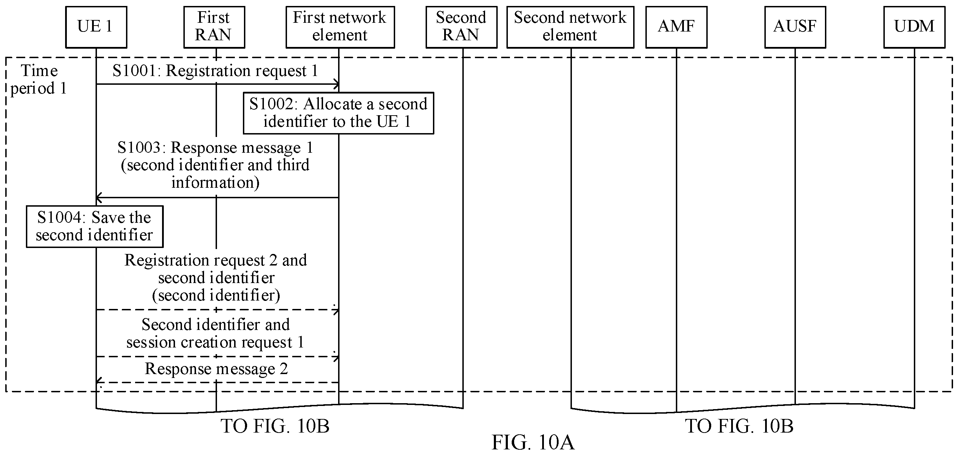

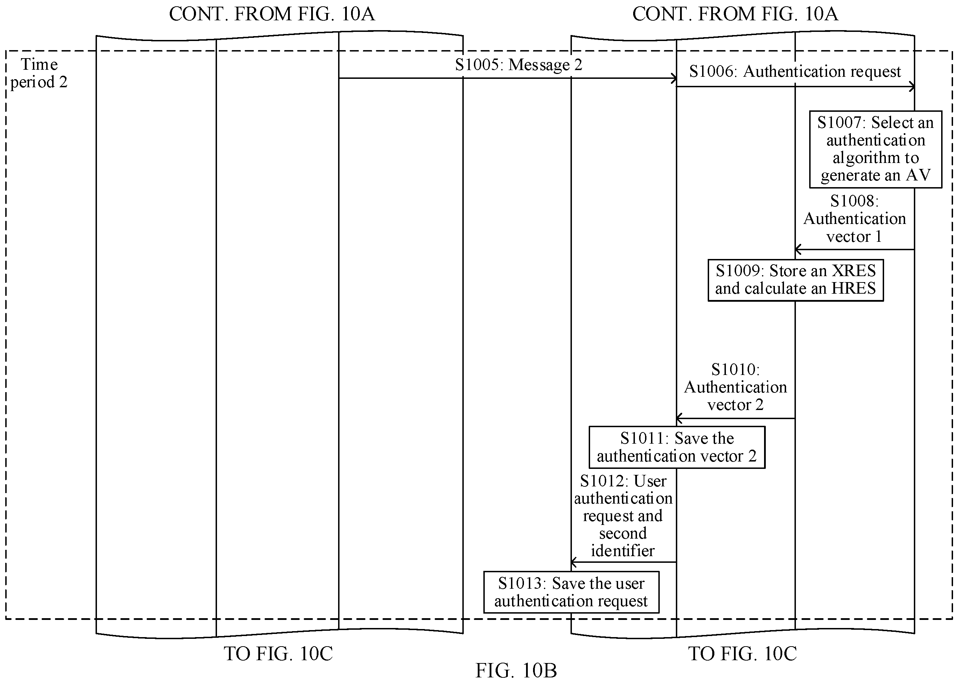

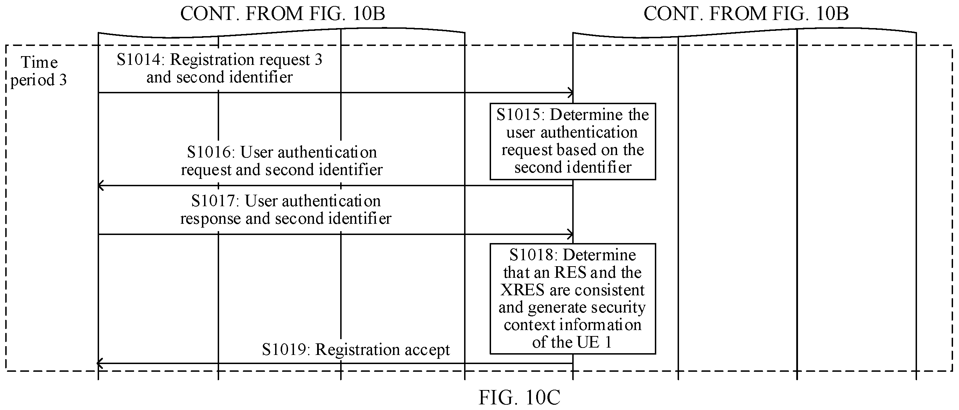

As shown in FIG. 10A to FIG. 10C, the following attach procedure may be divided into several phases:

Time period 1: The first satellite is not connected to a gateway station above UE 1. In this case, there is a communication link between the first network element and the UE 1, and there is no communication link between the first network element and an AMF.

S1001: The UE 1 sends a registration request 1 to the first network element via the first RAN.

S1002: The first network element allocates a second identifier to the UE 1 based on the registration request 1 and information about the first satellite.

For details, refer to step 430.

S1003: The first network element sends a response message 1 to the UE 1 via the first RAN.

The response message 1 may be a reply to the registration request 1, and the response message 1 includes the second identifier. The second identifier identifies the UE 1.

In addition, optionally, the response message 1 may further include some or more of first information, information about a timer 1, second information, or third information.

S1004: After receiving the response message 1, the UE 1 saves the second identifier.

For example, if the response message 1 further includes the first information, the UE 1 may enter a sleep state based on the first information.

For example, if the response message 1 further includes the information about the timer 1, the UE 1 may start the timer 1, and remain in the sleep state before the timer 1 expires.

In addition, in a possible implementation, before the UE 1 enters the sleep state based on the first information, the UE 1 may further send the second identifier and a registration request 2. The registration request 2 is a NAS message. The registration request 2 may include all parameters required in the registration procedure, or the registration request 2 is a supplementary message of the registration request 1, that is, includes a parameter that is not included in the registration request 1, and the registration request 1 and the registration request 2 jointly form all the parameters required in the registration procedure.

Correspondingly, the first network element sequentially stores, based on the second identifier, the registration request 2 in storage space corresponding to the UE 1.

In a possible implementation, before the UE 1 enters the sleep state based on the first information, the UE 1 may further send the second identifier and a session creation request 1. The session creation request 1 is a NAS message, and the NAS message includes a PDU session type, an APN, and the like.

For example, the first network element generates a message 2 based on the registration request 1, the registration request 2, and the session creation request 1, and saves the message 2 in the storage space corresponding to the UE 1.

Time period 2: The first satellite moves above the gateway station and is not connected to the UE 1. In other words, as the first satellite rotates around the earth, the first satellite leaves above an area in which the UE 1 is located, and the first satellite arrives above an area in which the gateway station is located, where the gateway station can communicate with the AMF. In this case, there is no communication link between the first network element and the UE 1, and there is a communication link between the first network element and the AMF.

S1005: The first network element sends the message 2 to the AMF.

For example, the first network element senses that the AMF is reachable, and sends the message 2.

In addition, the first network element may further send the third information to the AMF.

S1006: The AMF sends an authentication request to a UDM via an AUSF, where the authentication request includes a SUCI.

S1007: The UDM decrypts the SUCI to obtain a SUPI, and selects an authentication algorithm to generate an AV.

S1008: The UDM sends an authentication vector 1 to the AUSF.

The authentication vector 1 includes a 5G HE AV and the SUPI.

The 5G HE AV={RAND, XRES, AUTN, Kausf}.

S1009: The AUSF stores the XRES and calculates an HRES.

S1010: The AUSF sends an authentication vector 2 to the AMF.

The authentication vector 2 includes a 5G SE AV and the SUPI. The 5G SE AV={RAND, AUTN, HXRES}.

S1011: The AMF saves the authentication vector 2.

In addition, the AMF further saves the registration request 1, the registration request 2, and the session creation request 1.

S1012: The AMF sends a user authentication request and the second identifier to the second network element based on the third information.

The user authentication request is a NAS message. The NAS message includes the 5G SE AV.

The following uses only an example in which the AMF determines the second network element based on the third information for description. In addition, if the first network element does not send the third message to the UE 1, the AMF may alternatively determine the second network element. This is not limited in this application.

S1013: The second network element saves the user authentication request.

For example, the second network element allocates corresponding storage space to the UE 1, and saves the user authentication request in the storage space corresponding to the UE 1. The storage space also corresponds to the second identifier.

Time period 3: The second satellite is not connected to the gateway station above the UE 1. In other words, as the second satellite rotates around the earth, the second satellite leaves above an area in which the AMF is located, and the second satellite arrives above the area in which the UE 1 is located. In this case, there is a communication link between the second network element and the UE 1, and there is no communication link between the second network element and the AMF.

S1014: The UE 1 sends a registration request 3 and the second identifier.

For example, if the foregoing response message 1 includes the timer 1, after the timer 1 expires, the UE 1 may resend a registration request, for example, the registration request 3, to a detected satellite.

S1015: The second network element determines the user authentication request based on the second identifier.

S1016: The second network element sends the user authentication request and the second identifier to the UE 1.

For example, the second network element determines, based on the second identifier, the storage space corresponding to the UE 1, and sends the user authentication request saved in the storage space to the UE 1.

S1017: The UE 1 sends a user authentication response and the second identifier to the second network element.

The user authentication response is a NAS message, and the NAS message includes an RES.

In addition, the UE 1 may further send a session creation request 2 to the second network element, where content of the session creation request 2 may be the same as content of the session creation request 1.

S1018: The second network element determines that the RES and the XRES are consistent and generates security context information of the UE 1.

S1019: The second network element sends a registration accept to the UE 1.

Optionally, the registration accept includes a third identifier, that is, an identifier allocated by the second network element to the UE 1, and the second network element may delete the second identifier.

Till now, the registration procedure ends.

Based on the foregoing example, when the UE 1 subsequently sends service data, if the UE 1 sends the service data through a CP plane, the second network element may save the service data in signaling plane storage space of the UE 1 in a form of a NAS message; and if the UE 1 sends the service data through a UP plane, the second network element may save the service data in user plane storage space of the UE 1 in an IP format. The two storage space may be indexed by using the third identifier of the UE 1 that is sent together with the service data. When the second satellite rotates to space above the gateway station again, the stored data may be forwarded to an MME/AMF on the CP plane or an S-GW or a UPF on the UP plane. It may be understood that the UE 1 may further send uplink data or signaling to another satellite. This is not limited herein.

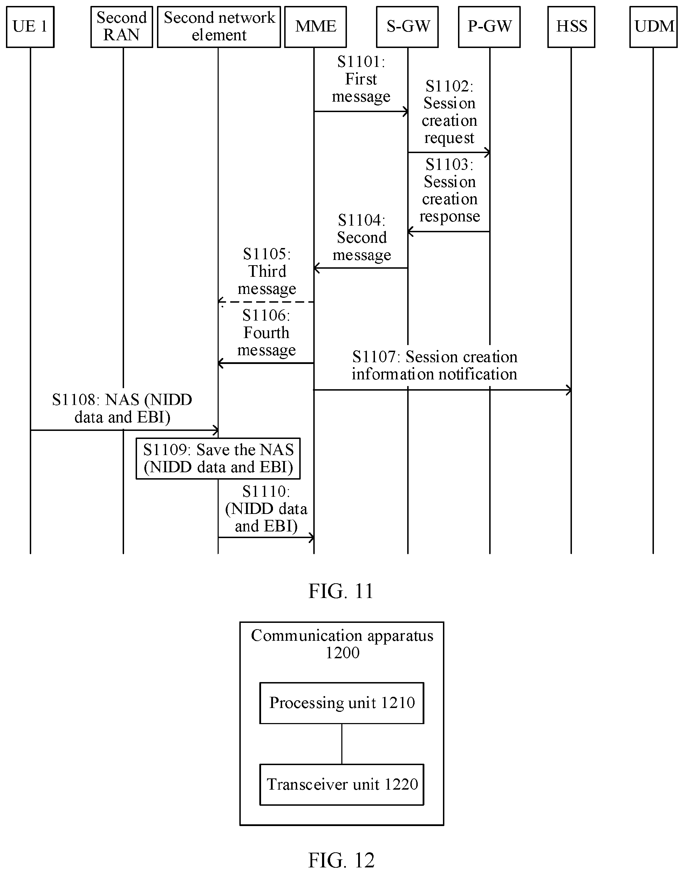

In a session establishment procedure, different session procedures are optionally created based on a network capability of UE or indication information, and different anchors may be selected, for example, an NIDD creation procedure, a CP-only creation procedure, and a common UP plane session creation procedure. The following is an example description of the session establishment process, as shown in FIG. 11.

S1101: An MME sends a first message to an S-GW.

The MME optionally creates different session establishment procedures based on network capability information of the UE or an indication indicating whether an ESM message container is included in an attach request. That is, when the attach request does not carry the ESM message container, it indicates that a common session does not need to be created, which means that data may be forwarded in an NIDD mode. In this case, the session is not established between the MME, the S-GW, and a P-GW, but is established between the MME and an SCEF. In this case, the first message should be sent to the SCEF. When the ESM message container is carried, the first message is optionally sent to the S-GW.

The first message includes a second identifier and related information carried by user plane information, for example, an EBI, APN, S11-U tunneling, an S11-U ID, and an MME DL TEID. The first message further includes indication information. The indication information may indicate a CP CIoT, a UP CIoT, information without the ESM message container, or the like.

For example, when the attach request carries a CP ONLY indication, or an additional update type carries SMS or CP CIoT EPS optimization indication information, in the session creation procedure, a tunnel related to the P-GW is not used, and only control plane network element-related information about creating tunnels based on an S11 interface may be transmitted between network elements such as a satellite and a ground MME, that is, subsequent steps S1102 and S1103 may be skipped.

In a common mode, all tunnel information related to forwarding may be transmitted.

S1102: The S-GW sends a session creation request to the P-GW.

The session creation request includes the EBI, a control plane TEID of the S-GW, a user plane TEID of the S-GW, and the indication information.

S1103: The P-GW sends a session creation response to the S-GW.

The session creation response includes a control plane TEID of the P-GW, a user plane TEID of the P-GW, and the EBI.

S1104: The S-GW sends a second message to the MME.

The second message includes the EBI, the control plane TEID of the S-GW, the user plane TEID of the S-GW, the control plane TEID of the P-GW, and the user plane TEID of the P-GW.

Optionally, in a CP only mode, the second message includes the EBI, the control plane TEID of the S-GW, and the user plane TEID of the S-GW.

S1105: The MME sends a third message to a second network element.

The third message includes the EBI and an S11-U TEID of the S-GW.

S1106: The MME sends a fourth message to the second network element.

The fourth message includes the second identifier, subscription information, an authentication vector, the EBI, the control plane TEID of the S-GW, and the user plane TEID of the S-GW.

S1107: The MME sends a session creation information notification to an HSS.

The session creation information notification includes one or more of the EBI, the control plane TEID of the S-GW, the user plane TEID of the S-GW, the control plane TEID of the P-GW, the user plane TEID of the P-GW, the second identifier or a third identifier, and the indication information.

For NIDD data transmission:

S1108: UE 1 sends NAS (NIDD data and EBI) to the second network element.

S1109: The second network element saves the NAS (NIDD data and EBI).

S1110: When a second satellite moves to space above a gateway station, the second network element sends the NAS (NIDD data and EBI) to the MME.

For CP only NAS data transmission, the following implementations are optional:

S1108: UE 1 sends NAS (data and EBI) to the second network element.

S1109: The second network element saves the NAS (data and EBI).

S1110: When a second satellite moves to space above a gateway station, the second satellite sends the NAS data to the MME, where the S11-U TEID identifier is superimposed on an outer layer (not shown).

For IP data transmission:

S1108: UE 1 sends IP data (data and EBI) to the second network element.

S1109: The second network element saves the IP data (data and EBI).

S1110: When a second satellite moves to space above a gateway station, the second satellite sends the IP data to the S-GW, where an S1-U TEID identifier is superimposed on an outer layer (not shown).

It may be understood that, to implement the functions in the foregoing embodiments, the first network element and the second network element include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

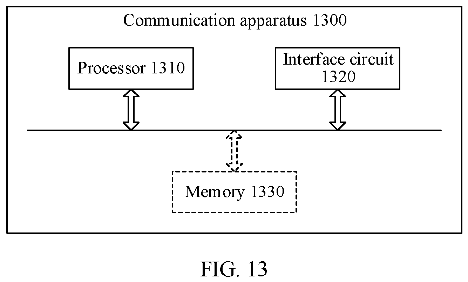

FIG. 12 and FIG. 13 are diagrams of structures of possible communication apparatuses according to embodiments of this application. These communication apparatuses may be configured to implement functions of the terminal, the first network element, and the core network device in the foregoing method embodiments, and therefore can also implement beneficial effects of the foregoing method embodiments.

As shown in FIG. 12, a communication apparatus 1200 includes a processing unit 1210 and a transceiver unit 1220. The communication apparatus 1200 is configured to implement functions of the terminal, the first network element, or the core network device in the foregoing method embodiments.

When the communication apparatus 1200 is configured to implement functions of the terminal in the foregoing method embodiments:

The transceiver unit 1220 is configured to: send a first message to a first network element, where the first network element is located on a first satellite; and receive a second message from the first network element, where the second message includes first information, and the first information is used to trigger the terminal to enter a sleep state. The processing unit 1210 is configured to enter the sleep state based on the first information.

In a possible design, the first information is capability information of the first network element, and the capability information of the first network element indicates that the first network element supports store-and-forward; or the first information indicates that there is no feeder information between the first network element and a core network device.

In a possible design, the first message is a NAS message or uplink data.

In a possible design, the first message is a first registration request message; and before entering the sleep state, the transceiver unit 1220 is configured to send a second registration request message to the first network element based on the first information.

In a possible design, the first message is a first registration request message, the second message further includes second information, and the second information is used to trigger reporting of at least one parameter; and before entering the sleep state, the transceiver unit 1220 is configured to send a second registration request message to the first network element based on the second information, where the second registration request message includes the at least one parameter.

In a possible design, after sending the second registration request message to the first network element, the transceiver unit 1220 is configured to receive a third message from the first network element, where the third message indicates that the first satellite does not serve the terminal.

In a possible design, the second message or the third message includes information about a first timer, and the first timer indicates a duration in which the terminal is in the sleep state; and the transceiver unit 1220 is configured to resend the first message after the first timer expires.

In a possible design, the second message further includes third information, the third information is used to determine a second satellite, and the second satellite is a next satellite to serve the terminal; the transceiver unit 1220 is configured to receive a broadcast message, where the broadcast message indicates a satellite that covers the terminal; the processing unit 1210 is configured to determine, based on the third information, that the satellite indicated by the broadcast message is the second satellite; and the transceiver unit 1220 is configured to resend the first message to a second network element, where the second network element is located on the second satellite.

In a possible design, the third information includes at least one of an identifier of the second network element, an identifier of the second satellite, or an identifier of another device located on the second satellite, and the second network element supports store-and-forward.

In a possible design, the second satellite covers the terminal earlier than the first satellite, and when there is a communication link between the first satellite and the core network device, there is also a communication link between the second satellite and the core network device, and the core network device is located on the ground.

When the communication apparatus 1200 is configured to implement functions of the first network element in the foregoing method embodiments:

The transceiver unit 1220 is configured to receive and send a message. The processing unit 1210 is configured to: receive a first message from a terminal via the transceiver unit 1220, where the first network element is located on a first satellite; and when there is no communication link between the first network element and a core network device, send a second message to the terminal, where the second message includes first information, the first information is used to trigger the terminal to enter a sleep state, and the core network device is located on the ground.

In a possible design, the first information is capability information of the first network element, and the capability information of the first network element indicates that the first network element supports store-and-forward; or the first information indicates that there is no feeder information between the first network element and the core network device.

In a possible design, the first message is a NAS message or uplink data.

In a possible design, the first message is a first registration request message; and after sending the second message to the terminal, the transceiver unit 1220 is configured to receive a second registration request message from the terminal.

In a possible design, the processing unit 1210 is configured to determine second information based on the first registration request message, where the second information is used to trigger reporting of at least one parameter; the second message further includes the second information; and the second registration request message includes the at least one parameter.

In a possible design, when there is a communication link between the first network element and the core network device, the transceiver unit 1220 is configured to send a third registration request message to the core network device, where the third registration request message is determined based on the first registration request message and the second registration request message.

In a possible design, after receiving the second registration request message from the terminal, the transceiver unit 1220 is configured to send a third message to the terminal, where the third message indicates that the first satellite does not serve the terminal.

In a possible design, the second message or the third message further includes information about a first timer, and the first timer indicates a duration in which the terminal is in the sleep state.

In a possible design, the second message further includes third information, the third information is used to determine a second satellite, and the second satellite is a next satellite to serve the terminal; and the processing unit 1210 is configured to determine the third information based on at least one of ephemeris information, location information of the terminal, and receive beam information of the first message.

In a possible design, the third information includes at least one of an identifier of a second network element, an identifier of the second satellite, or an identifier of another device located on the second satellite, the second network element is located on the second satellite, and the second network element supports store-and-forward.

In a possible design, the receive beam information includes at least one of receive moment information, a beam angle, a beam identifier, or physical deployment location information of a satellite on which a beam is located.

In a possible design, the second satellite covers the terminal earlier than the first satellite, and when there is a communication link between the first satellite and the core network device, there is also a communication link between the second satellite and the core network device.

In a possible design, when there is the communication link between the first network element and the core network device, the transceiver unit 1220 is configured to send the third information to the core network device.

When the communication apparatus 1200 is configured to implement functions of the first network element in the foregoing method embodiments:

The transceiver unit 1220 is configured to receive a first identifier and a first message from a first access device, where the first message is used by a terminal to request registration with a network, the first identifier is used to trigger the first network element to allocate a second identifier to the terminal, and the first network element and the first access device are located on a first satellite. The processing unit 1210 is configured to allocate the second identifier to the terminal based on the first identifier and information about the first satellite, where the second identifier identifies the terminal. When there is a communication link between the first network element and a core network device, the transceiver unit 1220 is configured to send the first message and the second identifier to the core network device, where the core network device is located on the ground.

In a possible design, before allocating the second identifier to the terminal based on the first identifier and an identifier of the first satellite, the processing unit 1210 is configured to determine that a quantity of terminals that have accessed the first satellite is less than a preset threshold.

In a possible design, the information about the first satellite includes one or more of the identifier of the first satellite, an identifier of the first network element, an identifier of the first access device, or a prefix address pool corresponding to the first satellite.

In a possible design, the first network element allocates storage space to the terminal, where the storage space is used to save an uplink message from the terminal and/or a downlink message to the terminal, and the storage space corresponds to the second identifier.

In a possible design, the transceiver unit 1220 is configured to receive a second message and the second identifier that are sent by the core network device; the processing unit 1210 is configured to save the second message based on the first identifier; and when there is a communication link between the first network element and the terminal, the transceiver unit 1220 is configured to send the second message to the terminal.

In a possible design, the transceiver unit 1220 is configured to: send the second identifier to the terminal; and receive a third message and the second identifier from the terminal; and the processing unit 1210 is configured to: save the third message based on the first identifier; and send the third message to the core network device there is the communication link between the first network element and the core network device.

In a possible design, the first identifier is a cell-radio network temporary identifier C-RNTI.

In a possible design, when there is the communication link between the first network element and the terminal, the transceiver unit 1220 is configured to send information about a first timer to the terminal, where the first timer indicates a duration in which the terminal is in a sleep state.

In a possible design, when there is the communication link between the first network element and the core network device, the transceiver unit 1220 is further configured to send a remaining value of the first timer to the core network device.

When the communication apparatus 1200 is configured to implement functions of the core network device in the foregoing method embodiments:

The transceiver unit 1220 is configured to receive a first message and a second identifier from a first network element, where the second identifier indicates a terminal, the first network element is located on a first satellite, and the core network device is located on the ground. The processing unit 1210 is configured to: determine a second satellite, where the second satellite is a next satellite to serve the terminal, where the second satellite is determined based on ephemeris information and location information of the terminal; or ephemeris information and location information of the terminal are sent to a compute device via the transceiver unit 1220, and indication information from the compute device is received, where the indication information indicates the second satellite. The transceiver unit 1220 is configured to send a second message and the second identifier to a second network element based on the first message, where the second network element is located on the second satellite.

In a possible design, the transceiver unit 1220 is configured to receive a remaining value of a first timer from the first network element, where the first timer indicates a duration in which the terminal is in a sleep state; and when determining the second satellite based on the ephemeris information and the location information of the terminal, the processing unit 1210 is configured to determine the second satellite based on the ephemeris information, the location information of the terminal, and the remaining value of the first timer.

In a possible design, the transceiver unit 1220 is configured to receive a remaining value of a first timer from the first network element, where the first timer indicates a duration in which the terminal is in a sleep state; and the core network device further sends the remaining value of the first timer to the compute device.

In a possible design, the second network element supports store-and-forward.

In a possible design, the transceiver unit 1220 is configured to receive capability information of the second network element from the second network element, where the capability information of the second network element indicates that the second network element supports store-and-forward.

In a possible design, the second satellite covers the terminal earlier than the first satellite, and when there is a communication link between the first satellite and the core network device, there is also a communication link between the second satellite and the core network device.

In a possible design, the first message is used by the terminal to request registration with the core network device, and the second message is a response message to the first message.

In a possible design, the transceiver unit 1220 is configured to receive capability information of the first network element from the first network element, where the capability information of the first network element indicates that the first network element supports store-and-forward.

For more detailed descriptions of the processing unit 1210 and the transceiver unit 1220, directly refer to related descriptions in the foregoing method embodiments. Details are not described herein.

As shown in FIG. 13, a communication apparatus 1300 includes a processor 1310 and an interface circuit 1320. The processor 1310 and the interface circuit 1320 are coupled to each other. It may be understood that, the interface circuit 1320 may be a transceiver or an input/output interface. Optionally, the communication apparatus 1300 may further include a memory 1330, configured to: store instructions executed by the processor 1310, store input data required by the processor 1310 to run the instructions, or store data generated after the processor 1310 runs the instructions.

When the communication apparatus 1300 is configured to implement the method shown in FIG. 5, the processor 1310 is configured to implement a function of the processing unit 1210, and the interface circuit 1320 is configured to implement a function of the transceiver unit 1220.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the methods in the foregoing embodiments. For example, the communication apparatus includes a processor and a memory. As shown in FIG. 13, the communication apparatus 1300 includes a processor 1310 and a memory 1330. The processor 1310 is coupled to the memory 1330. The memory 1330 stores instructions. When the instructions stored in the memory 1330 are executed by the processor 1310, the communication apparatus 1300 performs the methods performed by the network elements in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the foregoing network element. The processor and the storage medium may alternatively exist in the foregoing network element as discrete components.

All or some of the foregoing embodiments may be implemented by using software, hardware, firmware, or any combination thereof. When the software is used for implementation, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending, by a terminal, a first message to a first network element, wherein the first network element is located on a first satellite;
receiving, by the terminal, a second message from the first network element, wherein the second message comprises first information, and the first information is used to trigger the terminal to enter a sleep state; and
entering, by the terminal, the sleep state based on the first information.

2. The method according to claim 1, wherein the first information is capability information of the first network element, and the capability information of the first network element indicates that the first network element supports store-and-forward; or
the first information indicates that there is no feeder information between the first network element and a core network device.

3. The method according to claim 1 or 2, wherein the first message is a non-access stratum NAS message or uplink data.

4. The method according to any one of claims 1 to 3, wherein the first message is a first registration request message; and
before the terminal enters the sleep state, the method further comprises:
sending, by the terminal, a second registration request message to the first network element based on the first information.

5. The method according to any one of claims 1 to 3, wherein the first message is a first registration request message, the second message further comprises second information, and the second information is used to trigger reporting of at least one parameter; and
before the terminal enters the sleep state, the method further comprises:
sending, by the terminal, a second registration request message to the first network element based on the second information, wherein the second registration request message comprises the at least one parameter.

6. The method according to claim 4 or 5, wherein after the terminal sends the second registration request message to the first network element, the method further comprises:
receiving, by the terminal, a third message from the first network element, wherein the third message indicates that the first satellite does not serve the terminal.

7. The method according to claim 6, wherein the second message or the third message comprises information about a first timer, and the first timer indicates a duration in which the terminal is in the sleep state; andthe method further comprises:
resending, by the terminal, the first message after the first timer expires.

8. The method according to any one of claims 1 to 7, wherein the second message further comprises third information, the third information is used to determine a second satellite, and the second satellite is a next satellite to serve the terminal; and
the method further comprises:
receiving, by the terminal, a broadcast message, wherein the broadcast message indicates a satellite that covers the terminal;
determining, by the terminal based on the third information, that the satellite indicated by the broadcast message is the second satellite; and
resending, by the terminal, the first message to a second network element, wherein the second network element is located on the second satellite.

9. The method according to claim 8, wherein the third information comprises at least one of an identifier of the second network element, an identifier of the second satellite, or an identifier of another device located on the second satellite, and the second network element supports store-and-forward.

10. The method according to claim 8 or 9, wherein the second satellite covers the terminal earlier than the first satellite, and when there is a communication link between the first satellite and the core network device, there is also a communication link between the second satellite and the core network device, and the core network device is located on the ground.

11. A communication method, wherein the method comprises:
receiving, by a first network element, a first message from a terminal, wherein the first network element is located on a first satellite; and
when there is no communication link between the first network element and a core network device, sending, by the first network element, a second message to the terminal, wherein the second message comprises first information, the first information is used to trigger the terminal to enter a sleep state, and the core network device is located on the ground.

12. The method according to claim 11, wherein the first information is capability information of the first network element, and the capability information of the first network element indicates that the first network element supports store-and-forward; or
the first information indicates that there is no feeder information between the first network element and the core network device.

13. The method according to claim 11 or 12, wherein the first message is a NAS message or uplink data.

14. The method according to any one of claims 11 to 13, wherein the first message is a first registration request message; and
after the first network element sends the second message to the terminal, the method further comprises:
receiving, by the first network element, a second registration request message from the terminal.

15. The method according to claim 14, wherein the method further comprises:
determining, by the first network element, second information based on the first registration request message, wherein the second information is used to trigger reporting of at least one parameter;
the second message further comprises the second information; and
the second registration request message comprises the at least one parameter.

16. The method according to claim 14 or 15, wherein the method further comprises:
when there is a communication link between the first network element and the core network device, sending, by the first network element, a third registration request message to the core network device, wherein the third registration request message is determined based on the first registration request message and the second registration request message.

17. The method according to any one of claims 14 to 16, wherein after the first network element receives the second registration request message from the terminal, the method further comprises:
sending, by the first network element, a third message to the terminal, wherein the third message indicates that the first satellite does not serve the terminal.

18. The method according to claim 17, wherein the second message or the third message further comprises information about a first timer, and the first timer indicates a duration in which the terminal is in the sleep state.

19. The method according to any one of claims 11 to 18, wherein the second message further comprises third information, the third information is used to determine a second satellite, and the second satellite is a next satellite to serve the terminal; and
the method further comprises:
determining, by the first network element, the third information based on at least one of ephemeris information, location information of the terminal, and receive beam information of the first message.

20. The method according to claim 19, wherein the third information comprises at least one of an identifier of a second network element, an identifier of the second satellite, or an identifier of another device located on the second satellite, the second network element is located on the second satellite, and the second network element supports store-and-forward.

21. The method according to claim 19 or 20, wherein the receive beam information comprises at least one of receive moment information, a beam angle, a beam identifier, or physical deployment location information of a satellite on which a beam is located.

22. The method according to any one of claims 19 to 21, wherein the second satellite covers the terminal earlier than the first satellite, and when there is a communication link between the first satellite and the core network device, there is also a communication link between the second satellite and the core network device.

23. The method according to any one of claims 19 to 22, wherein the method further comprises:
when there is the communication link between the first network element and the core network device, sending, by the first network element, the third information to the core network device.

24. A communication method, wherein the method comprises:
receiving, by a first network element, a first identifier and a first message from a first access device, wherein the first message is used by a terminal to request registration with a network, the first identifier is used to trigger the first network element to allocate a second identifier to the terminal, and the first network element and the first access device are located on a first satellite;
allocating, by the first network element, the second identifier to the terminal based on the first identifier and information about the first satellite, wherein the second identifier identifies the terminal; and
when there is a communication link between the first network element and a core network device, sending, by the first network element, the first message and the second identifier to the core network device, wherein the core network device is located on the ground.

25. The method according to claim 24, wherein before the first network element allocates the second identifier to the terminal based on the first identifier and an identifier of the first satellite, the method further comprises:
determining, by the first network element, that a quantity of terminals that have accessed the first satellite is less than a preset threshold.

26. The method according to claim 25, wherein the information about the first satellite comprises one or more of the identifier of the first satellite, an identifier of the first network element, an identifier of the first access device, or a prefix address pool corresponding to the first satellite.

27. The method according to any one of claims 24 to 26, wherein the method further comprises:
allocating, by the first network element, storage space to the terminal, wherein the storage space is used to save an uplink message from the terminal and/or a downlink message to the terminal, and the storage space corresponds to the second identifier.

28. The method according to any one of claims 24 to 27, wherein the method further comprises:
receiving, by the first network element, a second message and the second identifier that are sent by the core network device;
saving, by the first network element, the second message based on the first identifier; and
when there is a communication link between the first network element and the terminal, sending, by the first network element, the second message to the terminal.

29. The method according to any one of claims 24 to 28, wherein the method further comprises:
sending, by the first network element, the second identifier to the terminal;
receiving, by the first network element, a third message and the second identifier from the terminal;
saving, by the first network element, the third message based on the first identifier; and
when there is the communication link between the first network element and the core network device, sending, by the first network element, the third message to the core network device.

30. The method according to any one of claims 24 to 29, wherein the first identifier is a cell-radio network temporary identifier C-RNTI.

31. The method according to any one of claims 24 to 30, wherein the method further comprises:
when there is the communication link between the first network element and the terminal, sending, by the first network element, information about a first timer to the terminal, wherein the first timer indicates a duration in which the terminal is in a sleep state.

32. The method according to claim 31, wherein the method further comprises:
when there is the communication link between the first network element and the core network device, further sending, by the first network element, a remaining value of the first timer to the core network device.

33. A communication method, wherein the method comprises:
receiving, by a core network device, a first message and a second identifier from a first network element, wherein the second identifier indicates the terminal, the first network element is located on a first satellite, and the core network device is located on the ground;
determining, by the core network device, a second satellite, wherein the second satellite is a next satellite to serve the terminal, wherein the core network device determines the second satellite based on ephemeris information and location information of the terminal; or the core network device sends ephemeris information and location information of the terminal to a compute device, and the core network device receives indication information from the compute device, wherein the indication information indicates the second satellite; and
sending, by the core network device, a second message and the second identifier to a second network element based on the first message, wherein the second network element is located on the second satellite.

34. The method according to claim 33, wherein the method further comprises:
receiving, by the core network device, a remaining value of a first timer from the first network element, wherein the first timer indicates a duration in which the terminal is in a sleep state; and
the determining, by the core network device, the second satellite based on the ephemeris information and the location information of the terminal comprises:
determining, by the core network device, the second satellite based on the ephemeris information, the location information of the terminal, and the remaining value of the first timer.

35. The method according to claim 33, wherein the method further comprises:
receiving, by the core network device, a remaining value of a first timer from the first network element, wherein the first timer indicates a duration in which the terminal is in a sleep state; and
the method further comprises:
sending, by the core network device, the remaining value of the first timer to the compute device.

36. The method according to any one of claims 33 to 35, wherein the second network element supports store-and-forward.

37. The method according to claim 36, wherein the method further comprises:
receiving, by the core network device, capability information of the second network element from the second network element, wherein the capability information of the second network element indicates that the second network element supports store-and-forward.

38. The method according to any one of claims 33 to 37, wherein the second satellite covers the terminal earlier than the first satellite, and when there is a communication link between the first satellite and the core network device, there is also a communication link between the second satellite and the core network device.

39. The method according to any one of claims 33 to 38, wherein the first message is used by the terminal to request registration with the core network device, and the second message is a response message to the first message.

40. The method according to any one of claims 33 to 39, wherein the method further comprises:
receiving, by the core network device, capability information of the first network element from the first network element, wherein the capability information of the first network element indicates that the first network element supports store-and-forward.

41. A communication apparatus, comprising a unit or a module configured to perform the method according to any one of claims 1 to 40.

42. A communication apparatus, wherein the communication apparatus comprises at least one processor, and the at least one processor is configured to perform the method according to any one of claims 1 to 40.

43. A computer-readable storage medium, wherein the computer-readable storage medium comprises a program, and when the program is run on an apparatus, the apparatus is enabled to perform the method according to any one of claims 1 to 40.

44. A computer program product, wherein the computer program product comprises a program or instructions, and when the program or the instructions are executed by an apparatus, the apparatus is enabled to perform the method according to any one of claims 1 to 40.
